(19) Europäisches Patentamt
European Patent Office
Office européen des brevets

(11) **EP 2 352 111 B1**

(12) **EUROPEAN PATENT SPECIFICATION**

(45) Date of publication and mention
of the grant of the patent:
**28.11.2012 Bulletin 2012/48**

(51) Int Cl.:
***G06T 1/00*** *(2006.01)*    ***G06K 9/00*** *(2006.01)*

(21) Application number: **10181427.5**

(22) Date of filing: **01.07.2002**

(54) **Hiding information in colour channels with reduced visibility**

Verbergen von Informationen in Farbkanälen mit reduzierter Sichtbarkeit

Masquage d'informations dans canaux de couleur à visibilité réduite

(84) Designated Contracting States:
**AT BE BG CH CY CZ DE DK EE ES FI FR GB GR
IE IT LI LU MC NL PT SE SK TR**

(30) Priority: **02.07.2001 US 898901
20.08.2001 US 933863
31.08.2001 US 945243
02.04.2002 US 115441
02.04.2002 US 115444
02.04.2002 US 115582**

(43) Date of publication of application:
**03.08.2011 Bulletin 2011/31**

(62) Document number(s) of the earlier application(s) in
accordance with Art. 76 EPC:
**02744779.6 / 1 410 313**

(73) Proprietor: **Digimarc Corporation
Beaverton, OR 97008 (US)**

(72) Inventors:
• **Reed, Alastair M.
Lake Oswego, OR 97034 (US)**
• **Brundage, Trent J.
Sherwood, OR 97140 (US)**
• **Hannigan, Brett T.
Portland, OR 97225-7008 (US)**
• **Cattone, Jeremy
Tigard, OR 97224 (US)**
• **Bradley, Brett, A.
Portland, OR 97202 (US)**
• **Berkley, Lou H., Jr.
San Francisco, CA 94102 (US)**

(74) Representative: **Hoarton, Lloyd Douglas Charles
et al
Forresters
Skygarden
Erika-Mann-Strasse 11
80636 München (DE)**

(56) References cited:
**EP-A2- 0 921 675    GB-A- 351 960**

## Description

Related Application Data

This application is related to the following U.S. Patent Applications: 09/898,901, filed July 2, 2001; 09/933,863, filed August 20, 2001; 09/945,243, filed August 31, 2001; 10/115,441, filed April 2, 2002; 10/115,444, filed April 2, 2002; and 10/115,582, filed April 2, 2002. Priority is claimed to each of these applications.

## Field of the Invention

The present invention relates to digital watermarking and steganographically hiding data.

## Background and Summary of the Invention

The present application discloses novel and inventive digital watermarking techniques and related applications.

Digital watermarking technology, a form of steganography, encompasses a great variety of techniques by which plural bits of digital data are hidden in some other object, preferably without leaving human-apparent evidence of alteration.

Digital watermarking may be used to modify media content to embed a machine-readable code into the media content. The media may be modified such that the embedded code is imperceptible or nearly imperceptible to the user, yet may be detected through an automated detection process.

Digital watermarking systems typically have two primary components: an embedding component that embeds the watermark in the media content, and a reading component that detects and reads the embedded watermark. The embedding component embeds a watermark pattern by altering data samples of the media content. The reading component analyzes content to detect whether a digital watermark is present. In applications where the watermark encodes information, the reading component extracts this information from the detected watermark. Assignee's U.S. Patent Application No. 09/503,881, filed February 14, 2000, published as US 6614914, discloses various encoding and decoding techniques. United States Patent Nos. 5,862,260 and 6,122,403 disclose still others.

EP 0 921 675 A2 teaches to embed inverse watermarks into the colour channels of a CMY colour images. The embedding strength depends on the signal level of the watermark.

One form of digital watermark is a so-called "fragile" watermark. A fragile watermark is designed to be lost, or to degrade predictably, when the data set into which it is embedded is processed in some manner, such as signal processing, scanning/printing, etc. A watermark may be made fragile in numerous ways. One form of fragility relies on low watermark amplitude. That is, the strength of the watermark is only marginally above the minimum needed for detection. If any significant fraction of the signal is lost, as typically occurs in photocopying operations, the watermark becomes unreadable. Another form of fragility relies on the watermark's frequency spectrum. High frequencies are typically attenuated in the various sampling operations associated with digital scanning and printing. Even a high amplitude watermark signal can be significantly impaired, and rendered unreadable, by such photocopying operations.

According to one aspect of the present invention, we hide data out-of-phase with respect to at least two color channels. Sometimes we use the term "inverted" instead of the term "out-of-phase." A watermark signal in one color plane (or channel) is applied to be out-of-phase with a corresponding watermark signals in another color plane(s) or channel(s). Basically, if we embed a positive signal at a first image location in a first color channels (e.g., by changing the first color channel's color level or luminance attributes) we then embed a corresponding negative signal at the first image location in a second color channel (e.g., black color channel). An effect of our inventive out-of-phase watermarking technique is to greatly reduce watermark visibility by canceling perceived luminance change in local areas throughout the image. The disclosed watermark is also fragile, since signal-processing operations that combine the out-of-phase color channel with the other channels cancels the watermark signal.

Nevertheless, we disclose several detection methods that are suitably tailored to detect our out-of-phase digital watermark.

According to another aspect, our out-of-phase watermark includes at least a first component and a second component. The second component is embedded so as to be out-of-phase with respect to the first component. In one implementation, the first component is printed with a first ultraviolet (UV) ink and the second component is printed with a second UV ink. The first UV ink preferably includes a shorter decay time in comparison to the second UV ink. The out-of-phase watermark has low visibility properties since, under steady-state UV illumination, the illuminating properties of the first and second watermark components cancel each other. Other examples involve unique detection methods for a UV out-of-phase digital watermark.

The invention is defined in independent claims 1, 10 and 13. The foregoing and other aspects, features and advantages of the present invention will be even more apparent from the following detailed description, which proceeds with reference to the accompanying drawings.

## Brief Description of the Drawings

FIG. 1 is a diagram of a color space depicting how to scale a color vector to black to effect a change in luminance.

FIG. 2 is a diagram of a color space depicting how to scale a color vector to white to effect a change in luminance.

FIG. 3a is a diagram illustrating cyan (C), magenta (M), yellow (Y) and black (K) channels.

FIG. 3b illustrates the CMYK channels of FIG. 3a, embedded with information.

FIG. 4 is a flow diagram illustrating an out-of-phase embedding process.

FIG. 5 illustrates hiding an image in media.

FIG. 6 is a flow diagram illustrating an embedding method according to one implementation of the present invention.

FIG. 7 and 8 are graphs showing hidden signal strength in terms of luminance.

FIGS. 9 and 10 are graphs showing hidden signal strength in terms of color saturation.

FIG. 11 illustrates limiting a signal tweak in low CMY areas to reduce hidden signal visibility.

FIG. 12 illustrates the segmentation of media into blocks.

FIG. 13 illustrates a feedback loop in an embedding process.

FIG. 14 illustrates feedback for the FIG. 13 feedback loop.

FIGS. 15a and 15b illustrate detection apparatus.

FIGS. 16 and 17 are diagrams showing obtaining luminance values.

FIG. 18 is a flow diagram illustrating a detection method.

FIG. 19 is a flow diagram illustrating a detection method of data in a red (R), green (G) and blue (B) color space.

FIG. 20 illustrates approximating a color saturation value in an RGB color space.

FIGS. 21 and 22 are diagrams illustrating relative threshold values for the method shown in FIG. 19.

FIG. 23 is a flow diagram illustrating a luminance collection method according to the present invention.

FIG. 24 illustrates orientation fiducials hidden in a media signal with our out-of-phase embedding techniques.

FIG. 25 illustrates out-of-phase embedding of a spot color.

FIG. 26 illustrates a printer calibration process.

FIG. 27 is diagram showing a baseline signal, the baseline signal embedded with a digital watermark signal, and the baseline signal embedded with an inverted digital watermark signal.

FIG. 28a is a graph showing a signal with a relatively short fluorescence decay time.

FIG. 28b is a graph showing a signal with a relatively longer fluorescence decay time.

FIG. 29 illustrates relative timing for a UV pulse.

FIG. 30 is a graph showing relative decay times and camera gating timing in relation to the signals shown in FIGS. 28a, 28b and 29.

FIG. 31 is a diagram illustrating color data embedded with an out-of-phase digital watermark.

FIGS. 32a and 32b respectively illustrate image capture of an out-of-phase digital watermark and camera synchronization.

FIG. 33 illustrates an ultraviolet detection apparatus.

FIG. 34 illustrates relative timing for a series of UV pulses.

FIG. 35 is a graph showing relative decay times and camera gating timing in relation to the signals shown in FIGS. 28a, 28b and 34.

FIG. 36 is a diagram illustrating RGB and CMY common color gamuts, and out-of gamut colors.

**Detailed Description**

General Watermarking Introduction

A watermark can be viewed as an information signal that is embedded in a host signal, such as an image, audio, video or some other media content. Watermarking systems typically include the following components: 1) an embedder that inserts a watermark signal in the host signal to form a combined signal; 2) a detector that determines the presence and orientation of a watermark in a potentially corrupted version of the combined signal; and 3) a reader that extracts a watermark message from the combined signal. In some implementations, the detector and reader are combined.

To encode a message, the watermark encoder analyzes and selectively adjusts the host signal to give it attributes that correspond to a desired message symbol or symbols to be encoded. There are many signal attributes that may encode a message symbol, such as a positive or negative polarity of signal samples or a set of samples, a given parity (odd or even), a given difference value or polarity of the difference between signal samples (e.g., a difference between selected spatial intensity values or transform coefficients), a given distance value between watermarks, a given phase or phase offset between different watermark components, a modulation of the phase of the host signal, a modulation of frequency coefficients of the host signal, a given frequency pattern, a given quantizer (e.g., in Quantization Index Modulation), etc.

The structure and complexity of a watermark signal can vary significantly, depending on the application. For example, the watermark may be comprised of one or more signal components, each defined in the same or different domains. Each component may perform one or more functions. Two primary functions include acting as an identifier to facilitate detection and acting as an information carrier to convey a message. In addition, components may be located in different spatial or temporal portions of the host signal, and may carry the same or different messages.

The host signal can vary as well. The host is typically some form of multi-dimensional media signal, such as an image, audio sequence or video sequence. In the digital domain, each of these media types is represented as a multi-dimensional array of discrete samples. For example, a color image has spatial dimensions (e.g., its horizontal and vertical components), and color space dimensions (e.g., CMYK, YUV or RGB). Some signals, like video, have spatial and temporal dimensions. Depending on the needs of a particular application, the embedder may insert a watermark signal that exists in one or more of these dimensions.

In the design of the watermark and its components, developers are faced with several design issues such as: the extent to which the mark is impervious to jamming and manipulation (either intentional or unintentional); the extent of imperceptibility; the quantity of information content; the extent to which the mark facilitates detection and recovery, and the extent to which the information content can be recovered accurately.

For certain applications, such as copy protection or authentication, the watermark should be difficult to tamper with or remove by those seeking to circumvent it. To be robust, the watermark should withstand routine manipulation, such as data compression, copying, linear transformation, flipping, inversion, etc., and intentional manipulation intended to remove the mark or make it undetectable. Some applications require the watermark signal to remain robust through digital to analog conversion (e.g., printing an image or playing music), and analog to digital conversion (e.g., scanning the image or digitally sampling the music). In some cases, it is beneficial for the watermarking technique to withstand repeated watermarking.

For other applications, such as forensic tracking, counterfeit detection, etc., the watermark should degrade predictably under routine manipulation. Such watermarks are refereed to generally as "fragile" watermarks, as discussed above.

A variety of signal processing techniques may be applied to address some or all of these design considerations. One such technique is referred to as spreading. Sometimes categorized as a spread spectrum technique, spreading is a way to distribute a message into a number of components (chips), which together make up the entire message. Spreading makes the mark more impervious to jamming and manipulation, and makes it less perceptible.

Another category of signal processing technique is error correction and detection coding. Error correction coding is useful to reconstruct the message accurately from the watermark signal. Error detection coding enables the decoder to determine when the extracted message has an error.

Another signal processing technique that is useful in watermark coding is called scattering. Scattering is a method of distributing the message or its components among an array of locations in a particular transform domain, such as a spatial domain or a spatial frequency domain. Like spreading, scattering makes the watermark less perceptible and more impervious to manipulation.

Yet another signal processing technique is gain control. Gain control is used to adjust the intensity of the watermark signal. The intensity of the signal impacts a number of aspects of watermark coding, including its perceptibility to the ordinary observer, and the ability to detect the mark and accurately recover the message from it.

Gain control can impact the various functions and components of the watermark differently. Thus, in some cases, it is useful to control the gain while taking into account its impact on the message and orientation functions of the watermark or its components. For example, in a watermark system described below, the embedder calculates a different gain for orientation and message components of an image watermark.

Another useful tool in watermark embedding and reading is perceptual analysis. Perceptual analysis refers generally to techniques for evaluating signal properties based on the extent to which those properties are (or are likely to be) perceptible to humans (e.g., listeners or viewers of the media content). A watermark embedder can take advantage of a Human Visual System (HVS) model to determine where to place an image watermark and how to control the intensity of the watermark so that chances of accurately recovering the watermark are enhanced, resistance to tampering is increased, and perceptibility of the watermark is reduced. Similarly, audio watermark embedder can take advantage of a Human Auditory System model to determine how to encode an audio watermark in an audio signal to reduce audibility. Such perceptual analysis can play an integral role in gain control because it helps indicate how the gain can be adjusted relative to the impact on the perceptibility of the mark. Perceptual analysis can also play an integral role in locating the watermark in a host signal. For example, one might design the embedder to hide a watermark in portions of a host signal that are more likely to mask the mark from human perception.

Various forms of statistical analyses may be performed on a signal to identify places to locate the watermark, and to identify places where to extract the watermark. For example, a statistical analysis can identify portions of a host image that have noise-like properties that are likely to make recovery of the watermark signal difficult. Similarly, statistical analyses may be used to characterize the host signal to determine where to locate the watermark.

Each of the techniques may be used alone, in various combinations, and in combination with other signal processing techniques.

In addition to selecting the appropriate signal processing techniques, the developer is faced with other design considerations. One consideration is the nature and format of the media content. In the case of digital images, for example, the image data is typically represented as an array of image samples. Color images are represented as an array of color vectors in a color space, such as RGB or YUV. The watermark may be embedded in one or more of the color components of an image. In some implementations, the embedder may transform the input image into a target color space, and then proceed with the embedding process in that color space.

Color Image Processing

In image processing applications, it is sometimes useful to be able to change the colors of an image while reducing the visibility of these changes. Image watermarking is one application where it is desirable to alter image samples to encode information in a manner that is readily recoverable by an automated process, yet substantially imperceptible to human visual perception. Often, the aim of watermark encoding is to maximize a watermark signal without significantly affecting image quality. Since the eye is more sensitive to changes in memory colors such as flesh tones or blue sky, it is beneficial to have a method of selectively controlling strength of a watermark in certain color regions.

In one implementation, a watermark encodes auxiliary information in an image by making changes to image samples. A color-masking framework maps a change in an image sample attribute to an equivalent yet less perceptible change in the color values of that image sample. This mapping can be used to obtain equal perceptual watermark changes to image samples in other areas of color space and to apply the change in the least visible color channels.

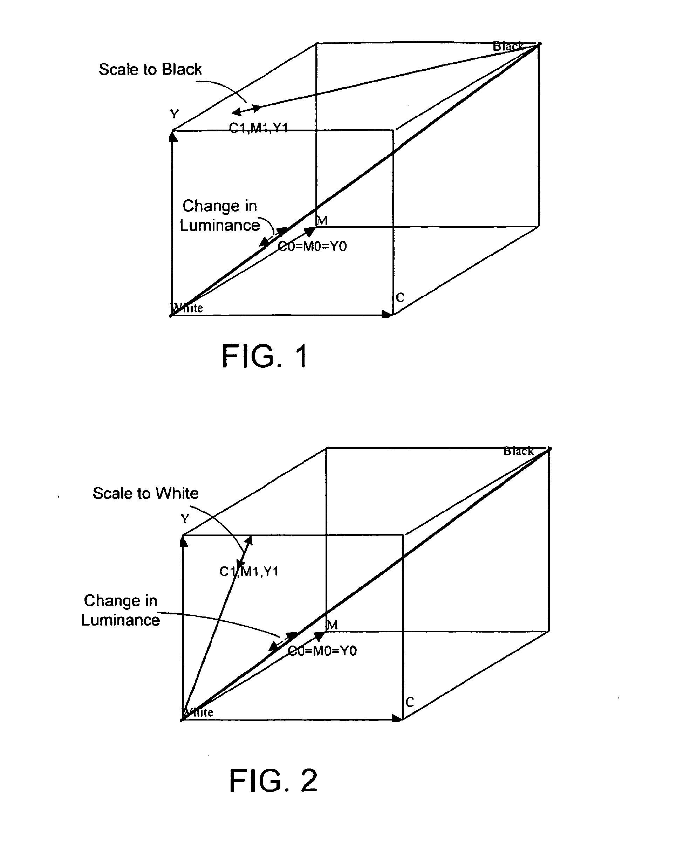

While the implementation details of watermark encoding schemes vary significantly, a class of watermarking schemes can be modeled as an array of changes to luminance values of a host image. The host image comprises an array of color vectors (e.g., an array of color such as RGB, CMY, CMYK, etc). The image sample may be represented as a vector between black and the pixel color value. To encode a watermark, the luminance of the image sample may be increased or decreased as shown in FIG. 1. FIG. 1 shows a 3-dimensional color space with Cyan (C), Magenta (M) and Yellow (Y) axes. The bold axis between black and white represents luminance. To make an equivalent luminance change in an image sample of a given color vector (C1, M1, Y1), one may make a corresponding scale to black as shown.

An alternative method of obtaining the same luminance change is to scale the image sample like a vector between white and the sample's color value as shown in FIG. 2. To make an equivalent luminance change, one may make a corresponding scale to white as shown.

By using the scale to white method for colors with high yellow content such as yellow, red and green, and scale to black for blue, cyan and magenta a lower visibility watermark can be encoded with the same detectability.

Once the color vector entries are established, each of the entries is associated with a set of scale factors. The set includes a scale factor for each color component. The specific color components in the implementation depend on the color format of the image. For example, images in an RGB format have scale factors for each of the R, G and B color components. Similarly, images in a CMY format have scale factors for each of the C, M and Y components of each table entry. The scale factors for each entry are derived by rewriting the above mathematical expression and solving for each color's scale factor as a function of the known color component values.

Redundant Color Properties

Three-color components, such as Red, Green, Blue (RGB) or Luminance, color component "a" and color component "b" (L*a*b), can be combined to uniquely identify a particular color. In many cases, more than three-color components can be combined to specify (or approximate) the same particular color. Typically, four (4) color components, e.g., cyan, magenta, yellow and black (CMYK) are used in printing processes. Extra colors, sometimes referred to as "spot colors," can be added for more accurate color reproduction. A company logo, might include a particular shade of green, which is printed with a corresponding green ink (e.g., a green spot color). High fidelity color printing often uses more than four (4) color components. These additional color components expand the gamut of printing colors for very high quality printing, such as fine art reproduction. Security printing (e.g., bank notes, financial documents, certificates, etc.) also uses a plurality of inks, with fine lines, such as intaglio.

Printing processes with more than three (3) inks (or color component dimensions) have a built-in redundancy, since more than three (3) color components (e.g., CMYK) are used to specify a color at a particular point in an image. This implies that many different combinations of four (4) or more printing inks (or components) can be used to represent a three (3)-component color. By way of example, a point in the CMY color space (e.g., 61% cyan, 50% magenta, and 48% yellow) can be represented (or approximated) by a corresponding point in the CMYK color space (e.g., 51% cyan, 40% magenta, 38% yellow, and 22% black). Respective color levels can be generated from relative percentages. This same 3-channel color point can also be represented in the CMYK color space as 32% cyan, 23% magenta, 22% yellow, and 43% black. Of course, this is but one of many possible color combinations. We can utilize this color redundancy to reduce the human visibility of a digital watermark. For example, a watermark signal in one color channel, can be effectively counteracted (e.g., cancelled) in the other color (or black) channels, while still obtaining the desired color.

Our inventive techniques, discussed below, can be used to provide a fragile watermark. The watermark's fragility is due, at least in part, to its small-scale spatial variation within a media signal, making the watermark ideal to combat typical counterfeiting operations such as scanning/printing, digital manipulation and photocopying. Of course, the process described for "CMYK" media below, could also be applied in a similar manner to other multi-color plane printing processes.

Low Visibility Watermarks Using Out-of-Phase Color Embedding

Media is embedded with a watermark signal. Of course, the media may correspond to an image, digital image, photograph, video frame, graphic, etc., and in some cases, may even include a physical object such as a document, banknote, postage stamp, etc. Typically, a watermark signal has at least one component, which when embedded in the media corresponds to (or affects) various areas or pixels in the media. In the case of an area (or pixel) represented in a color space, the watermark signal component can be added to or subtracted from the color value of the area (or pixel) in all or some of the color dimensions.

Hiding Information Out-of-Phase

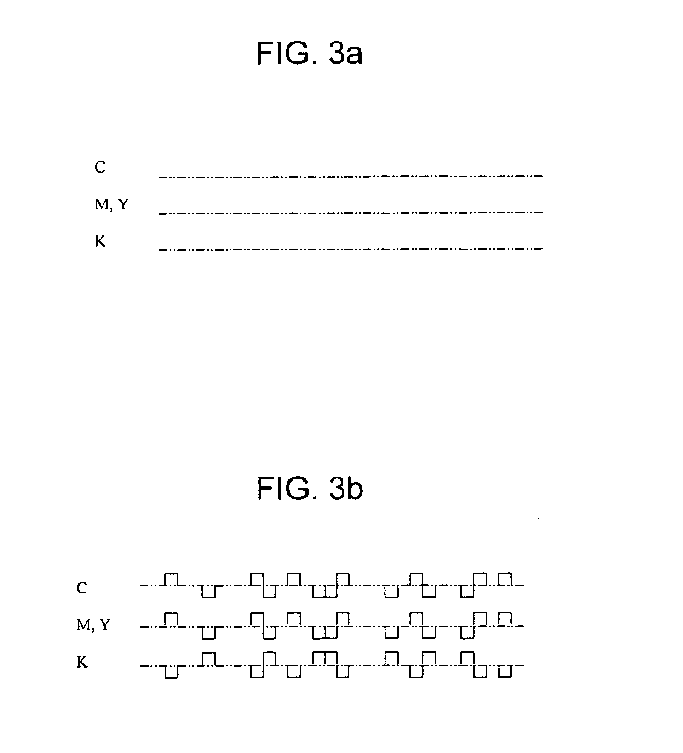

Now consider our inventive out-of-phase digital watermarking techniques with reference to FIGS. 3a and 3b. In FIG. 3a, the dash/dot C, M, Y and K lines represent, respectively, cyan, magenta, yellow and black color channels for a line (or other area) of a media signal (e.g., a picture, image, media signal, video frame, document, etc.). The FIG. 3a lines represent a base level or a particular color level, color intensity or gray scale. Of course, it is expected that the color level (or gray-scale) will vary over the media signal. FIG. 3b illustrates the media of FIG. 3a, which has been embedded with our out-of-phase digital watermark signal. The watermark signal is preferably applied to each of the color component dimensions C, M and Y.

In FIGS. 3a and 3b, the M and Y channels are represented by one signal, since these color components can be approximately equal, but separate signals. Of course, it is not necessary for these components to be equal, and in many cases the yellow and magenta components are not equal. The illustrated "bumps" (or "tweaks") in FIG. 3b represent the digital watermark signal, e.g., corresponding (or are spatially aligned) upward and downward signal adjustments in relation to a respective color channel (e.g., color levels or luminance values) at given points over the media signal. The tweaks are preferably applied at the same level (or signal strength). Alternatively, the bumps are applied with a different signal strength (or tweak level) when compared to one another. Of course, these tweaks can be embedded over a color channel in a predetermined pattern, a pseudo random fashion, a spreading fashion, etc., to facilitate embedding of a digital watermark signal.

For the K dimension (or channel), the digital watermark signal is preferably embedded to be out-of-phase with respect to the CMY channels. Most preferably, the K channel is approximately out-of-phase (e.g., inverted) with the watermark signals in the CMY color channels, as shown in FIG. 3b. For example, if a digital watermark signal modifies each of the color channels at a media first location with a tweak level (e.g., color level adjustment) of say 7, then a tweak level of -7 correspondingly modifies the K channel at the media's first location. This inventive digital watermark technique is referred to as our out-of-phase (or "K-phase") digital watermark. (We note that if a watermark signal is determined in terms of luminance, we can assign or weight corresponding tweak levels to the respective color plane pixel values to achieve the luminance value tweak. Indeed, a tweak value can be spread over the CMY channels to achieve a collective luminance at a given media location. The luminance attributable to the CMY tweak at the given location is preferably cancelled or offset by the luminance attributable to a corresponding inverted K channel tweak at the given media location.).

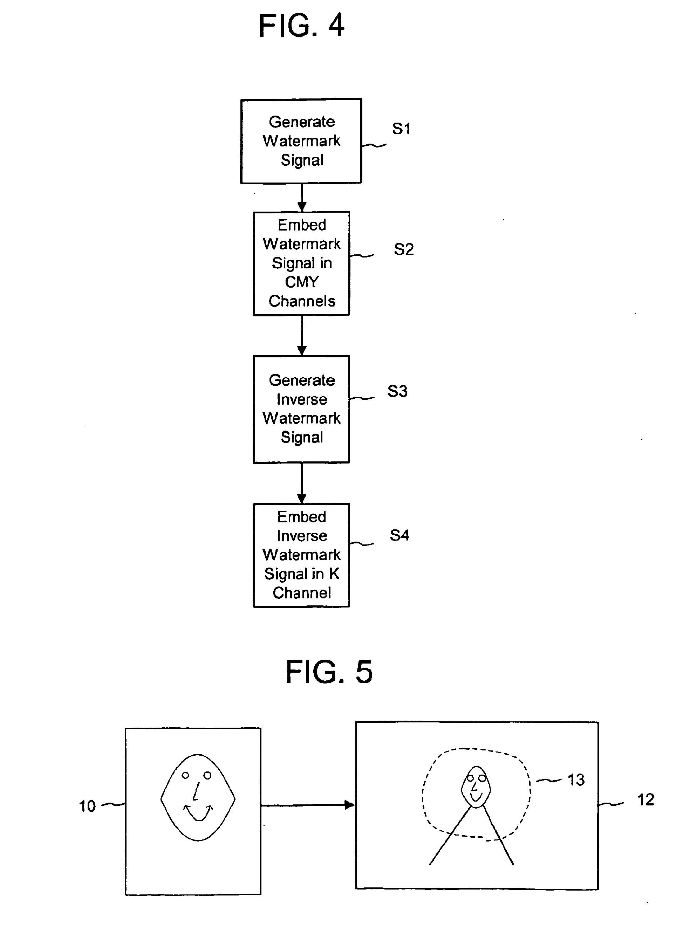

With reference to FIG. 4, one out-of-phase embedding method generates (or determines) a watermark signal as shown in step S1. The watermark signal is embedded in the CMY channels in step S2. The inverse of the watermark signal is calculated in step S3, and such inverse signal is embedded in the K channel in step S4. Of course, the order of such steps is not critical. For example, a watermark signal can be determined, and an inverse calculated. The various color component dimensions can then be embedded. In another embodiment, the K channel is embedded with a watermark signal. An inverse signal is calculated, and the CMY channels are embedded with the inverse signal.

Our inventive watermarking scheme greatly reduces watermark perceptibility. Since the watermark signal for the K channel is applied to be approximately inverted when compared to the respective (or collective) tweaks applied to the C, M and/or Y channels, the watermark visibility is greatly reduced. The visibility reduction is achieved by the effective cancellation of perceived luminance changes when the CMYK image is viewed or printed. Indeed, combining an inverted watermark signal "tweak" or "bump" in a K channel with a corresponding non-inverted watermark signal tweak or bump in the CMY channels effectively cancels an overall perceived luminance change for a given area -- greatly reducing visibility of the digital watermark.

Image Embedding

One application of our above out-of-phase embedding techniques is to hide an image in a media signal. The image can be a photograph, a graphic, a barcode (1-D or 2-D), etc., etc. With reference to FIG. 5, an image 10 is steganographically hidden within media 12. Of course, media 12 may represent an image, photograph, video frame, graphic, picture, logo, product tag, product documentation, visa, business card, art work, brochure, document, product packaging, trading card, banknote, deed, poster, ID card (including a driver's license, member card, identification card, security badge, passport, etc.), postage stamp, etc., etc. And image 10 can correspond to a digital representation of a photograph, picture, graphic, text, orientation fiducial, code, object, barcode, message, digital watermark, outline, symbol, etc., etc. In the FIG. 5 example, image 10 includes a close-up photograph, and the media includes a driver's license or passport photograph.

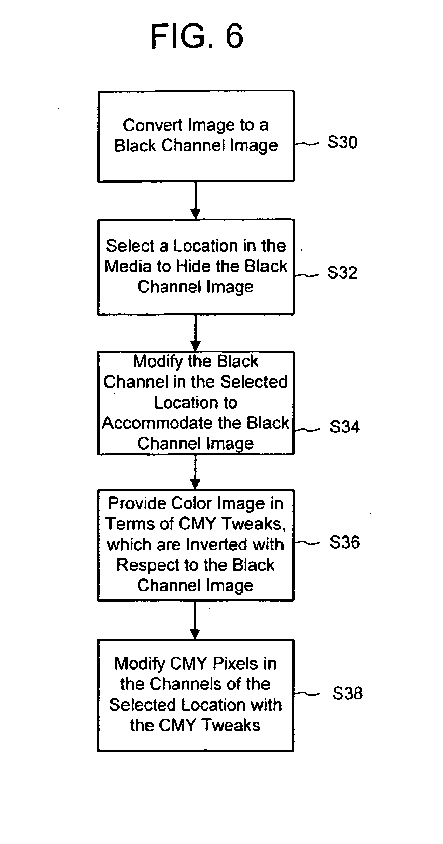

With reference to FIG. 6, our image hiding is preferably initiated by converting image 10 to a black channel image 10' (step S30 - FIG. 6). Most digital imaging software tools such as Adobe's Photoshop facilitate such a black channel conversion. The black channel image 10' includes a set of black pixel values (e.g., gray-scale values) 10'. A location in the media 12 is selected to place the black channel image (step S32). The dashed circle 13 in FIG. 5 represents this selected location. The media 12 location can be represented by sets of media 12 pixels. (For example, a first set of pixels corresponds to the selected location's black channel values, a second set corresponds to the selected location's cyan channel values, a third set corresponds to the selected location's magenta channel values, and a fourth set corresponds to the selected location's yellow channel values.). The set of black channel image 10' values is applied to the black channel pixels in the selected location 13 of media 12 - effectively modifying media 12 (step S34). For example, if an image 10' pixel includes a gray-scale value of 3, this gray-scale value is applied to a corresponding black pixel value in the selected media location 13 to raise that corresponding black pixel value by 3. In an alternative implementation, instead of adjusting the corresponding black pixel in the selected media 12 location by the gray-scale value, we replace that corresponding pixel value with the black image 10' gray-scale value. In another implementation, the corresponding media 12 black pixel is modified to achieve the gray-scale value of the image 10' pixel. Of course we can scale and/or weight the gray-scale value as needed prior to modifying pixels in the selected location 13 of media 12.

The black channel image 10' is inverted to produce a set of signal tweaks (step S36). For example, if the black channel image includes a pixel tweak with a grayscale value of say 24, then a corresponding inverted tweak value for the CMY channels is - 24. (In an alternative implementation, image 10 is converted into corresponding C, M and Y images and such images are inverted and then applied to their respective channels.). These signal tweaks are then used to modify or change the color values in their respective CMY color channels (step S38). Most preferably, in the above example, the -24-tweak value is applied to each of the CMY color channels. The overall luminance cancellation can be effected as such. In another implementation we spread the tweak value over the CMY channels to achieve an overall luminance change in a given media location to cancel the +24 tweak in the black channel. For example, if using a luminance equation of: $L = 0.3*C + 0.6*M + 0.1*Y$, we can achieve an overall luminance tweak of -24 by tweaking C = -15, M = -30 and Y = -15. Of course there is a vast range of other color combinations to achieve the same collective luminance change. Care should be taken, however, to minimize a color shift when using this tweak-spreading alternative. The CMY pixels and the K pixels are thus out-of-phase with respect to one another - resulting in a local cancellation of the perceived luminance change. Accordingly, image 10 is successfully hidden or carried by media 12.

We note that the selected location 13 can be determined manually, e.g., via editing software tools (like Adobe's Photoshop). Or the selection process can be automated.

Hiding Enhancements

We have developed enhancements that can be optionally applied to our out-of-phase hiding techniques. These enhancements apply to hiding both images and digital watermark signals (in this section both will be referred to as a hidden signal). While these techniques are not necessary to carry out our out-of-phase hiding techniques, they generally reduce the visibility of a hidden signal.

High Luminance Areas

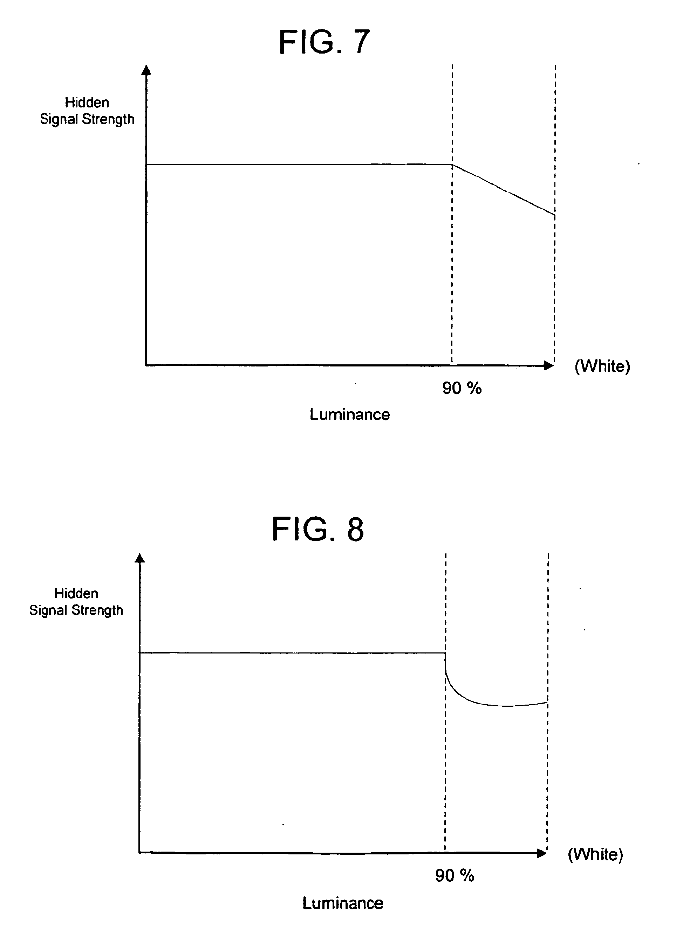

Media 12 may include areas of low CMY and/or K ink (or signal intensity). In a first case, an area includes little or no C, M and/or Y ink. This results in an inability to counteract (or cancel) an inverted signal in a corresponding K channel. Accordingly, we can sample the luminance of a media 12 area (or pixel) and, based on the luminance level, determine whether to scale back the hidden signal strength. For example, we begin to scale back the signal strength once the luminance reaches a predetermined threshold (e.g., in a range of 70 - 95 % luminance). We can scale back the signal strength for a given area according to a linear reduction, as shown in FIG. 7, or we can scale the signal strength in a non-linear manner, e.g., as shown in FIG. 8. The illustrated scaling signal strength applies to both the K channel and CMY channels. In a related implementation, we determine the luminance of the yellow channel, and then we base our scaling decisions on the yellow luminance percentage.

Saturated Color

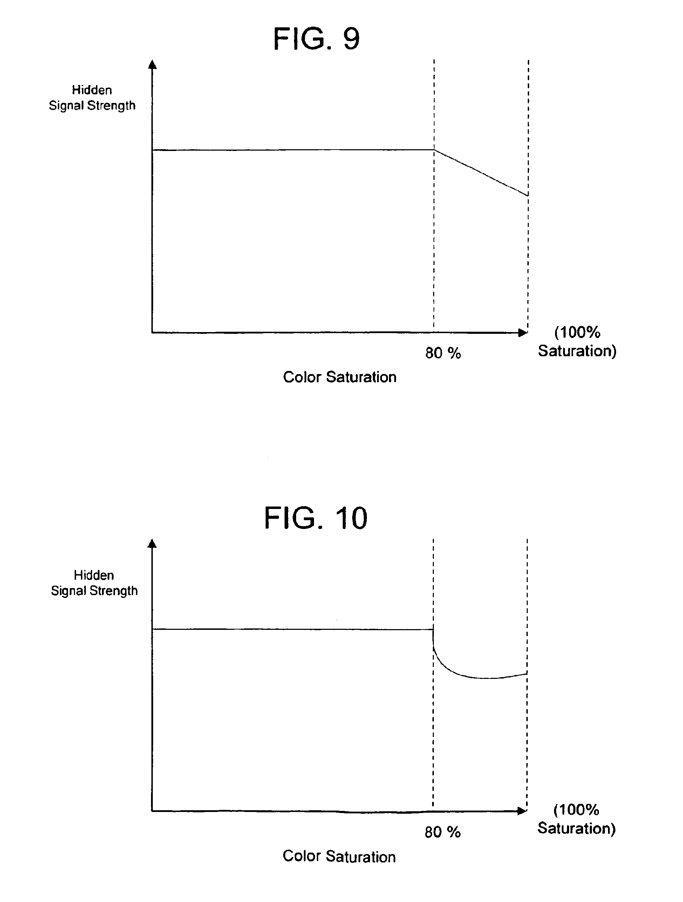

Hiding signals in a saturated color area can also result in increased hidden signal visibility. For this document the term "saturation" refers to how pure a color is, or refers to a measure of color intensity. For example, saturation can represent the degree of color intensity associated with a color's perceptual difference from a white, black or gray of equal lightness. We determine the color saturation level in a color plane (e.g., the yellow color plane), and then scale back a hidden signal strength as the color saturation level exceeds a predetermined level (e.g., in a range of 70-95 % yellow color saturation). As with the FIGS. 7 and 8 implementations, we can scale the signal strength in a linear manner (FIG. 9) or in a nonlinear manner (FIG. 10).

Low or High Luminance Areas

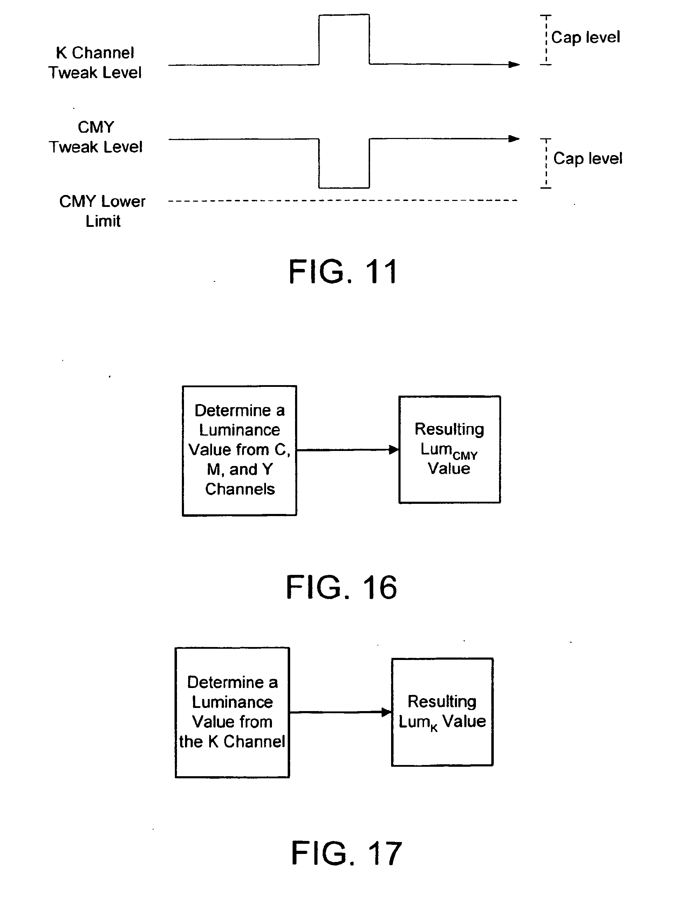

We have found that we can even further improve the visibility characteristics of our hidden signals by considering the amount of luminance at a given pixel or other media 12 area. A low luminance may indicate that there is insufficient CMY to compensate for a K channel tweak. For example, a 10 % luminance in CMY for a given pixel implies that the pixel can accommodate only about a 10% signal tweak (e.g., remember the simplified luminance relationship mentioned above: $L = 0.3*C + 0.6*M + 0.1*Y$). With reference to FIG. 11, we can cap (or limit) the positive K tweak signal level in such low CMY areas to ensure that the CMY levels can be sufficiently decreased to counteract or cancel the positive K channel signal.

Similarly, in an area of high CMY luminance, a negative K channel tweak can be capped (or limited) to ensure a sufficient range to increase the CMY values.

Equalizing Detectability

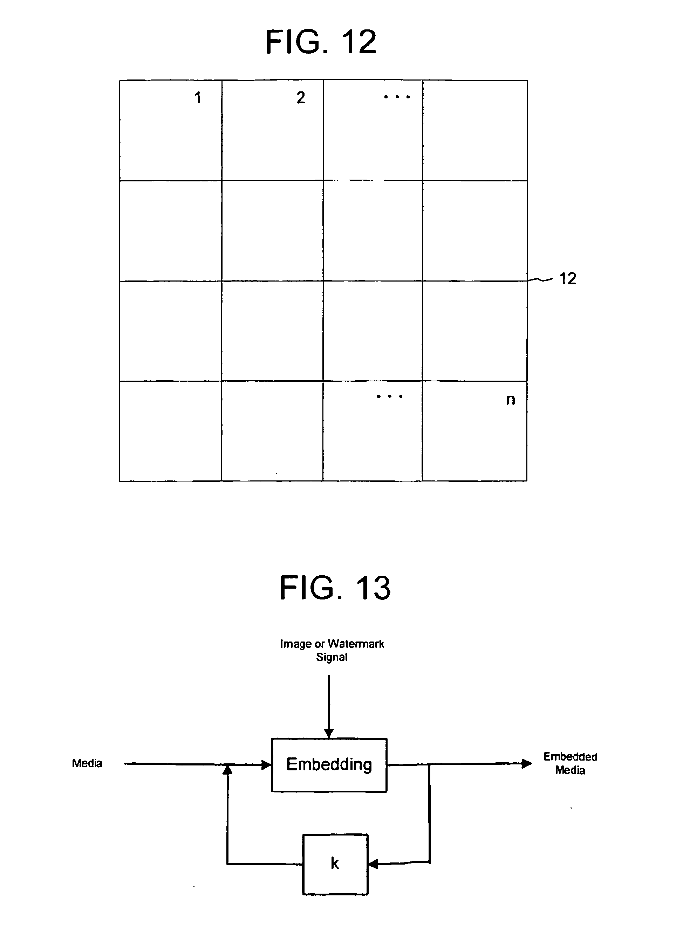

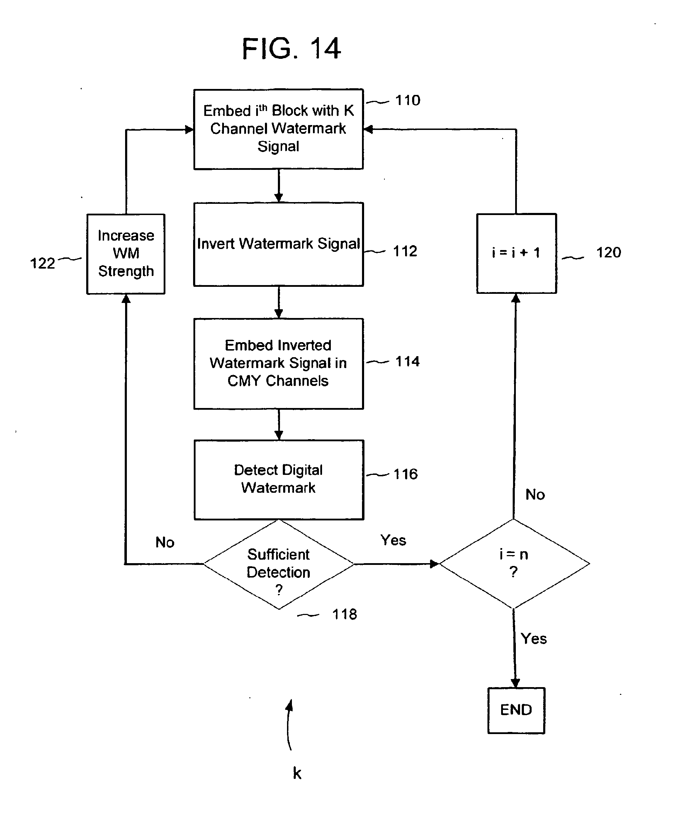

Now consider an implementation where media 12 is segmented into a plurality of blocks (FIG. 12). Here a block size can range from a pixel to a group of pixels. We redundantly embed an image or watermark signal in each of (or a subset of) the blocks. In one implementation, as shown in FIG. 13, we preferably use signal feedback (k) to regulate a redundant embedding process. A signal feedback (k) method is shown in FIG. 14. A black (K) channel image or watermark signal (in this section hereafter both referred to as a "watermark") is embedded in block i of media 12 (step 110), where "i" is an integer ranging from 1 — n and where n is the total number of blocks. The watermark signal is inverted (step 112) and embedded in the CMY channels of block i (step 114). At this point, we preferably perform a detection process of the signal embedded within the $i^{th}$ block (step 116). The detection process determines whether the signal is sufficiently detectable (step 118). The term "sufficient" in this context can include a plurality of different meanings. One meaning of "sufficient" implies that the signal is detectable. Another meaning implies that the detectability of the signal is ranked (e.g., in terms of error correction needed, ease of detectability, or a detection-reliability metric, etc.). The term sufficient in a ranking context also implies that the detection ranking is above a predetermined threshold. The process moves to embed a new block i+1 if the embedding is sufficient (120). Otherwise the signal strength is increased or otherwise altered (step 122) and the embedding of block i is repeated.

Such a signal feedback process helps to ensure consistent embedding throughout media 12.

Infrared Image Detection

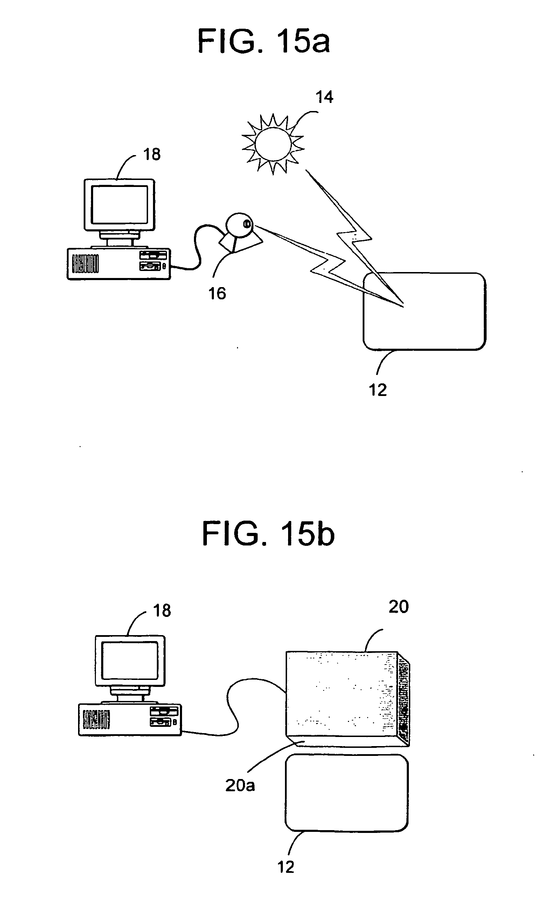

An infrared detection method for a signal embedded with our out-of-phase embedding techniques is illustrated with reference to FIG. 15a. The illustrated detection method employs infrared illumination to facilitate image (or watermark) detection. Media 12 is illuminated with an infrared illumination source 14. The media 12 is embedded as discussed above, for example, to include various components in a multicolor dimension space (e.g., CMYK). A first component (or image) is preferably embedded in the CMY channels. A second component (or image) is embedded in the K channel. The second component is preferably inverted with respect to the CMY channels.

Infrared illumination source 14 preferably includes a light emitting diode, e.g., emitting approximately in a wavelength range of 800nm - 1400nm, or a plurality of light emitting diodes ("LED"). Of course, there are many commercially available infrared diodes, and such may be suitable interchanged with our watermark detection techniques. It will be appreciated that many commercially available incandescent light sources emit light both in the visible and infrared ("IR") spectrums. Such incandescent light sources may alternatively be used as infrared illumination source 14. Indeed, infrared watermark detection may be possible in otherwise normal ("daylight") lighting conditions, particularly when using an IR-pass filter.

A conventional power source powers the infrared illumination source. (We note that a variable trim resistor and a small wall transformer can be optionally employed to control illumination source 14.). Power alternately can be supplied from a battery pack, voltage or current source, or by directly tapping a power source of a camera, e.g., internally drawn from a parallel, USB, or corded power lines. For a consumer device, a battery pack or a single power cord that is stepped down inside a digital watermark reader housing can also be used.

Returning to the composition of an out-of-phase hidden image (or watermark), a first image (or watermark) component is embedded in a K (or black) channel. A second image component, e.g., which is out-of-phase with respect to the K channel, is embedded in the CMY channels. These characteristics have significance for infrared detection. In particular, C, M and Y inks will typically have high transmission characteristics in the infrared spectrum when printed, which render them nearly imperceptible under infrared illumination. Yet conventional black inks absorb a relatively high amount of infrared light, rendering the black channel perceptible with infrared illumination. We note that standard processing inks, such as those conforming to the standard web offset press (SWOP) inks, include black ink with IR detection properties. Of course, there are many other inks that may be suitably interchanged with this aspect of the present invention.

As discussed above our out-of-phase embedding provides an effective cancellation of perceived luminance changes when the CMYK image is viewed in the visible spectrum. Indeed, combining an inverted watermark signal "tweak" or "bump" in a K channel with a corresponding non-inverted watermark signal tweak or bump in the CMY channels effectively cancels an overall perceived luminance change. However, under infrared illumination, the hidden image (or watermark) component in the black (K) channel becomes perceptible without interference from the C, M and Y channels. An infrared image primarily portrays (e.g., emphasizes) the black channel, while the C, M and Y channels are effectively imperceptible under infrared illumination.

In one implementation, camera 16 captures an image of media 12. Preferably, camera 16 includes an IR-Pass filter that passes IR while filtering visible light. For example, the Hoya RM90 filter available from M&K Optics L.L.C. is one of many IR-Pass/Visible Opaque filters suitable for daylight detection. Another suitable filter is the RG850 filter, part number NT54-664, available from Edmund Scientific. These filters are offered as examples only, and certainly do not define the entire range of suitable IR-pass filters. Of course there are many other IR-Pass filters that are suitably interchangeable with this aspect of the present invention.

In yet another implementation, a conventional digital camera (or web cam) is modified so as to capture infrared light. In particular, most digital cameras and web cams include an IR filter, which filters out IR light. Removing the IR filter allows the camera to capture light in the IR spectrum. Consider a visibly dark environment (e.g., an enclosed case, shielded area, dark room, etc.). Media 12 is illuminated by infrared illumination source 14 in the visibly dark environment. Camera 16 (without an IR filter) effectively captures an infrared image (i.e., the K channel image) corresponding to the illuminated media 12.

The captured image is communicated to computer 18. Preferably, computer 18 includes executable software instructions stored in memory for execution by a CPU or other processing unit. If media 12 includes a digital watermark, the software instructions preferably include instructions to detect and decode the embedded digital watermark. Otherwise, the instructions preferably include instructions to display or analyze the K-phase image. The software instructions can be stored in memory or electronic memory circuits. Of course, computer 18 can be a handheld computer, a laptop, a general-purpose computer, a workstation, etc. Alternatively, computer 18 includes a hard-wired system, which precludes the need for software instructions.

With reference to FIG. 15b, a detection housing 20 can be provided to house an infrared illumination source 14 and digital camera (both not shown in FIG. 15b, since they are within the opaque housing 20). The housing 20 is preferably opaque to shield (or otherwise constructed to filter) the camera and media 12 from visible light. The housing 20 has an opening 20a to receive the media 12. In a first case, opening 20a is adapted to engulf media 12. This allows media 12 to be placed on a surface (e.g., table, imaging station, or counter) and the housing opening 20a to be placed over media 12, effectively shielding media 12 from visible light. In a second case, the opening 20a receives media 12 into (e.g., slides media through opening 20a) and positions media 12 within the opaque housing 20. In either implementation, the infrared illumination source 14 illuminates media 12, and the digital camera 16 captures an image of the illuminated media (e.g., captures as image of the K-channel image). The camera 16 communicates with computing device 18, which detects and decodes a digital watermark embedded with media 12, if present, or otherwise displays the image.

In another illustrative embodiment, the above described infrared detection technique is carried out in a visibly dark environment, such as a dark room, shielded area, etc. An out-of-phase image (or digital watermark) is embedded in media. The media is illuminated with an infrared illumination source, and a digital camera captures an image of the illuminated media.

In still another illustrative embodiment, the above described infrared detection technique is carried out in a visibly lighted environment. An out-of-phase image (or watermark) is embedded in media. The media is illuminated with an infrared illumination source, and a digital camera captures an image of the media. Preferably, the camera includes an IR-pass filter. The digital camera communicates with a computing device, which detects and decodes an out-of-phase image (or digital watermark) embedded in the media.

Infrared detection is an elegant solution to detect out-of-phase images or digital watermarks, since high transmission colors in the IR spectrum are effectively washed out, allowing detection of a low transmission color channel. Specialized inks are not required to embed the out-of-phase digital watermark. Indeed most multi-color printer ink packs, offset ink, process inks, dye diffusion thermal transfer inks, such as inks conforming to the SWOP standard, include black inks that allow infrared detection. Some of these inks include a carbon-based black ink, furthering the absorption of IR. While infrared detection is ideal for out-of-phase images or digital watermarks, this method is also applicable to detection of conventional digital watermarks. For instance, a watermark signal can be embedded only in a black channel of media. Infrared illumination helps to reveal the embedded watermark in this black channel. Alternatively, a digital watermark is embedded across many color planes, while detection is carried out in only those color planes that are perceptible with IR illumination. Additionally, while we have discussed infrared detection techniques, we note that ultraviolet (UV) detection is also possible. In this case, one of the color channels (including the K channel) preferably includes UV pigments or properties. A UV detection process is carried out in a manner analogous to that discussed above.

(We also note that a CMY color can include IR/UV pigments or properties to facilitate detection of that color with respective IR or UV detection methods.).

High resolution Scan

We now discuss an alternative detection method and system for detecting an out-of-phase, color component-based digital watermark. Consider a first implementation as depicted in FIGS. 16 and 17. A media signal is analyzed as follows. Initially, luminance values are determined for CMY and K color planes (FIG. 16). The CMY luminance can be computed as a properly weighted sum of the cyan, magenta and yellow primary components. For example: Lum = .3C + .6M +.1 Y. (Of course, as will be appreciated by those skilled in the art, other weighting coefficients can be used to determine a CMY luminance.). So for a given point (or pixel), a luminance value is determined for the CMY color dimensions. Similarly, as shown in FIG. 17, a luminance value for K is determined. In one embodiment, the K luminance equals the value of the K component.

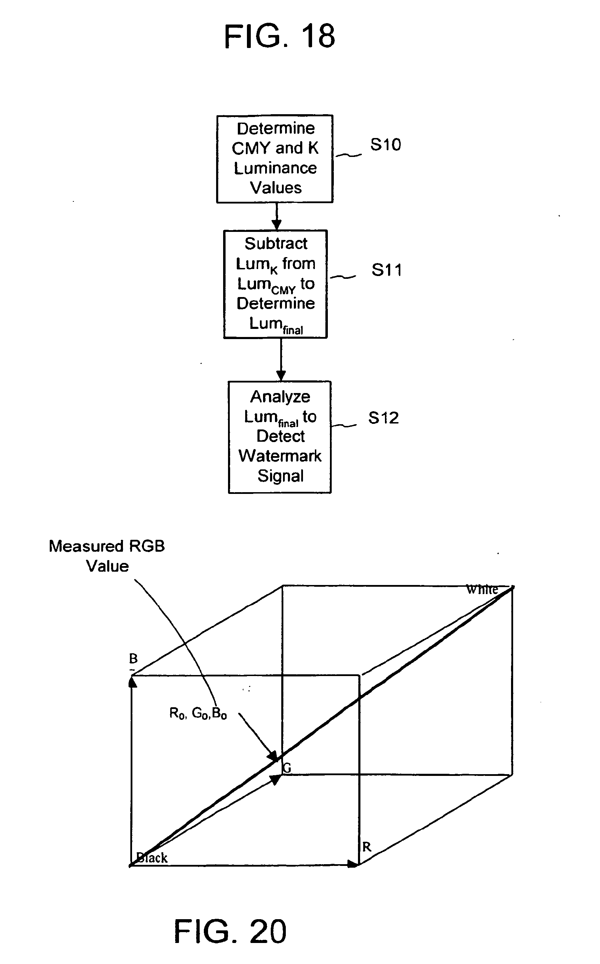

The detection process is further described with respect to FIG. 18. In step S10, a luminance value is determined from the collective contribution of the CMY channels at a given image location, and luminance attributable to the K channel is determined for the area:

$$CMY => lum_{cmy}$$

$$K => lum_k ,$$

where $lum_{cmy}$ is the luminance of CMY and $lum_k$ is the luminance of K. In step S 11, $lum_k$ is subtracted from $lum_{cmy}$:

$$Lum_{final} = lum_{cmy} - lum_k.$$

The step S 11 subtraction operates to help reduce image content, and to reinforce the watermark signal by effectively adding the K watermark signal value to the CMY watermark signal, since the K watermark signal is the inverse of the CMY channel signals.

As shown in step S12, $Lum_{final}$ can be analyzed for watermark detection.

Fragile Watermark

An out-of-phase watermark is fragile since a signal processing operation that combines the K channel with the CMY channel effectively cancels the watermark signal due to the combination of the inverted and non-inverted signal tweaks. Conversion to other color spaces similarly degrades the watermark signal. Take a typical scan/print process for example. Digital scanners typically scan images in a RGB color space. Scanning an out-of-phase embedded, CMYK printed image degrades the embedded watermark due to the combination of the K signal (inverted) with the CMY signal (non-inverted) in a local area. When the RGB image representation is printed, the watermark signal is difficult to detect, particularly with a low resolution RGB scan. Similarly, other conversions, such as to a L*a*b color space, degrade the out-of-phase watermark due to the combination of K with CMY throughout local areas. Nevertheless, the watermark signal is detectable with CMYK data as described above with respect to FIG. 18.

A fragile watermark has utility in many applications. Take counterfeiting, for example. The inventive fragile watermark is embedded in original CMYK media. If the media is copied, the embedded fragile watermark is either lost or degrades predictable. The copy is recognized as a copy (or counterfeit) by the absence or degradation of the fragile watermark. Fragile watermarks can also be used in conjunction with other watermarks, such as robust watermarks. The fragile watermark announces a copy or counterfeit by its absence or degradation, while the other robust watermark identifies author, source, links and/or conveys metadata or other information, etc. In other embodiments, a fragile watermark is an enabler. For example, some fragile watermark may include plural-bit data that is used to enable a machine, allow access to a secure computer area, verify authenticity, and/or link to information. This plural-bit data is lost or sufficiently degrades in a copy, preventing the enabling functions. Other fragile watermark applications are discussed in the U.S. patent applications mentioned above.

High Resolution Scan of Watermarked Image

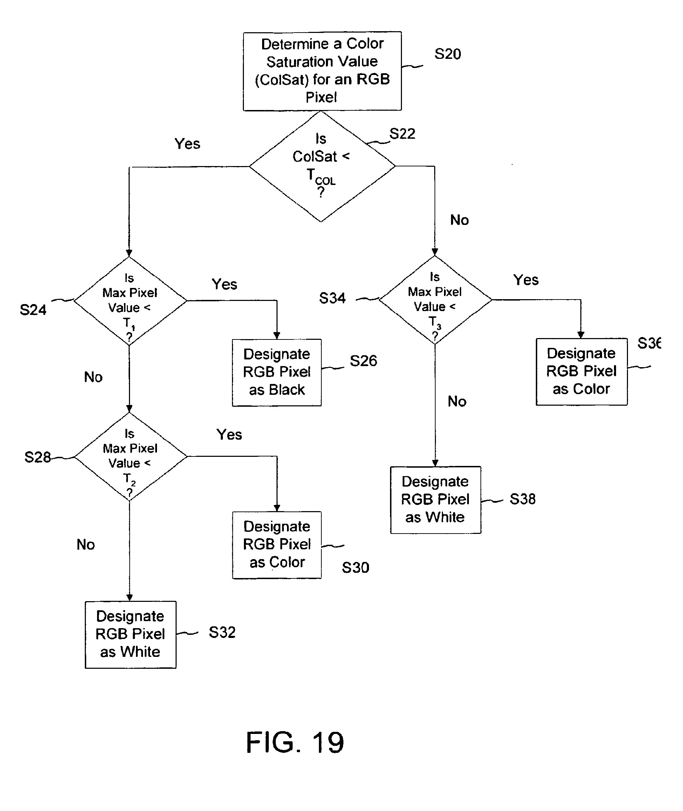

Oftentimes, CMYK data is not available for a watermark detection process. For example, a watermarked CMYK image may be optically scanned with a scanner that scans the printed CMYK data in a different color space, such as RGB. A high resolution RGB scan may nevertheless be used to recover an estimation of the watermark signal, which would be otherwise undetectable with a low RGB resolution scan. In this case, pixels can be assigned color or K values to generate respective color and K planes. A final luminance value can be determined from these planes. Consider the following method, as shown in FIG. 19, for a high resolution RGB scan (e.g., about 8 times the screen ruling or more) of a CMYK image.

In step S20, a color saturation (ColSat) value is determined for each RGB pixel. ColSat can be calculated by dropping a perpendicular line from a measured RGB value (e.g., $R_o$, $G_o$, $B_o$, as shown in FIG. 20) to the RGB luminance axis. This color saturation calculation alternatively can be approximated by:

$$\text{ColSat} = \max(\text{RGB}) - \min(\text{RGB}),$$

where max(RGB) is determined by taking the maximum of the red, green and blue values $R_o$, $G_o$, $B_o$, and min(RGB) is determined by taking the minimum of the red, green and blue values $R_o$, $G_o$, $B_o$. Of course, other known methods for determining a color saturation value are suitably interchangeable with this step.

In step S22, preferably for each RGB pixel (or pixel area), it is determined whether ColSat $< T_{col}$, where $T_{col}$ is a predetermined threshold color saturation, e.g., based on a scanner calibration, detection sensitivity and/or other threshold number. For example, a pure cyan pixel will typically correspond to a (0, 100, 100) RGB value. However, a scanner may read this pixel as a (20, 80, 80) RGB value. The threshold value $T_{col}$ can be set to allow for such scanner sensitivity. $T_{col}$ can also be adjusted to reflect acceptable tolerances. If ColSat $< T_{col}$ flow continues to step S24, where it is determined whether the maximum measured (e.g., determined, scanned, calculated, etc.) pixel value is $< T_1$. Here, $T_1$ is a predetermined pixel value, e.g., based on scanner calibration, detection sensitivity and/or other threshold numbers.

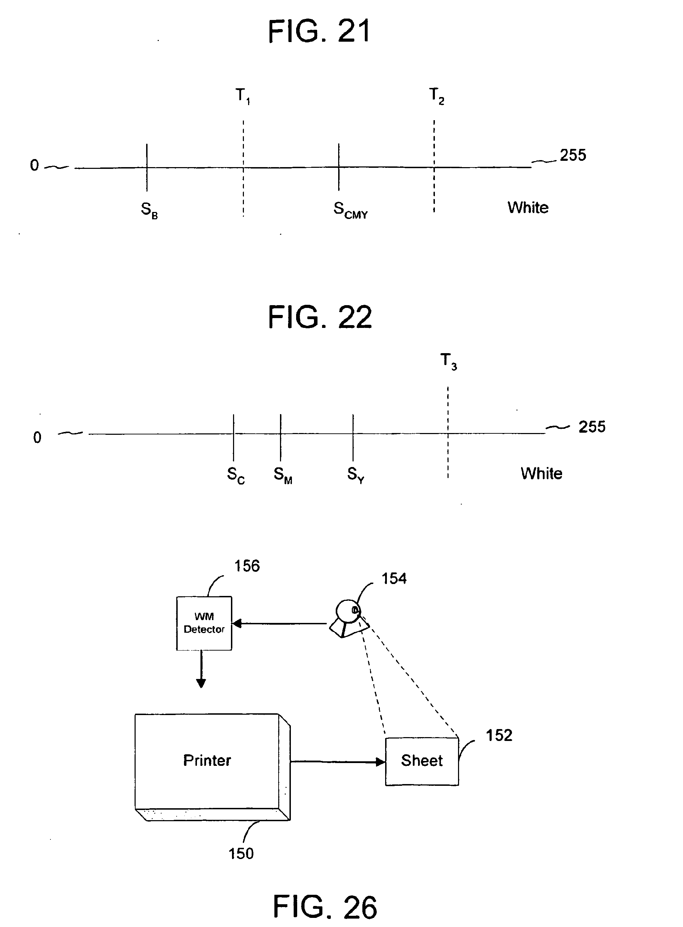

FIG. 21 illustrates a graphical relationship that shows digital threshold and scanner pixel values on a scale between Black (0) and white (255). Value $S_B$ is a scanner measured (or designated) black, which, due to scanner sensitivity and/or characteristics, is generally offset from black (0). Similarly, SCMY is a scanner measured CMY overprint (e.g., a 100% overprint). If the maximum pixel value is $< T_1$ the pixel is designated as black (K) in step S26. A corresponding pixel range is shown graphically in FIG. 21, as the values less than $T_1$. As discussed, $T_1$ can be selected based on scanner characteristics. In one embodiment, $T_1$ is selected to have a value midway between scanner-measured black ($S_B$), and scanner measured CMY overprint ($S_{CMY}$). Of course, $T_1$ can be adjusted from this midpoint value to accommodate sensitivity requirements and/or scanner characteristics. (A maximum pixel value can be chosen in a number of known techniques, such as selecting the color component of a pixel, e.g., if a measured pixel value corresponds to (20, 70, 80), the color component 80 comprises the maximum pixel value.).

If the max pixel value is not $< T_1$, the pixel value is compared against another threshold value. In step S28, it is determined whether the max pixel value is $< T_2$. If so, the pixel is designated as color in step S30. Returning again to FIG. 21, the corresponding range of pixel values falls between $T_1$ and $T_2$. The threshold value $T_2$ can be selected based on scanner characteristics, or based on sensitivity requirements. In one embodiment, $T_2$ is selected to have a value midway between $S_{CMY}$ and white (255). Of course, this value can be adjusted based on sensitivity need and/or scanner characteristics.

If the max pixel value is not $< T_2$, the pixel value is designated as white in step S32. The corresponding pixel range lies between $T_2$ and white (255).

If in step S22, it is determined that ColSat is not $< T_{col}$ flow continues to step S34, where it is determined whether the max pixel value is $< T_3$. If so, the pixel is designated as a color pixel in step S36. Here, $T_3$ is a predetermined pixel value. In one embodiment, $T_3$ is selected to have a value midway between a scanner measured (or determined) yellow value and white (255). Of course, this value can be adjusted based on sensitivity requirements and/or scanner characteristics. Otherwise, the pixel value is designated white in step S38. This relationship is shown in FIG. 22, where $S_C$, $S_M$ and $S_Y$ corresponding with scanner measured (or determined) cyan, magenta and yellow values.

Color and K planes can be constructed once each RGB color pixel is designated as a color, white or K pixel.

To create the K plane, pixels designated as black are turned "on," while the pixels that are designated as white or color are turned "off." In one embodiment, the respective "off" pixels are masked. In another embodiment, the off pixels (or alternatively the on pixels) are flagged or otherwise marked to indicate their designation and/or inclusion/non-inclusion.

Similarly, to create the color plane, pixels designated as "white" or "black" are turned off, while the rest of the pixels (e.g., the color pixels) are turned on.

The pixel (or area) values are summed for the color plane to obtain a low resolution (LR) color luminance ($lum_{color}$) per pixel (or per area). Similarly, the pixel values are summed for the black plane to obtain a LR black luminance ($lum_K$). A final luminance value ($lum_{final}$) for each pixel (or area) can be determined from:

$$lum_{final} = lum_{color} - lum_k.$$

The $lum_{final}$) value can be passed into a watermark detection process.

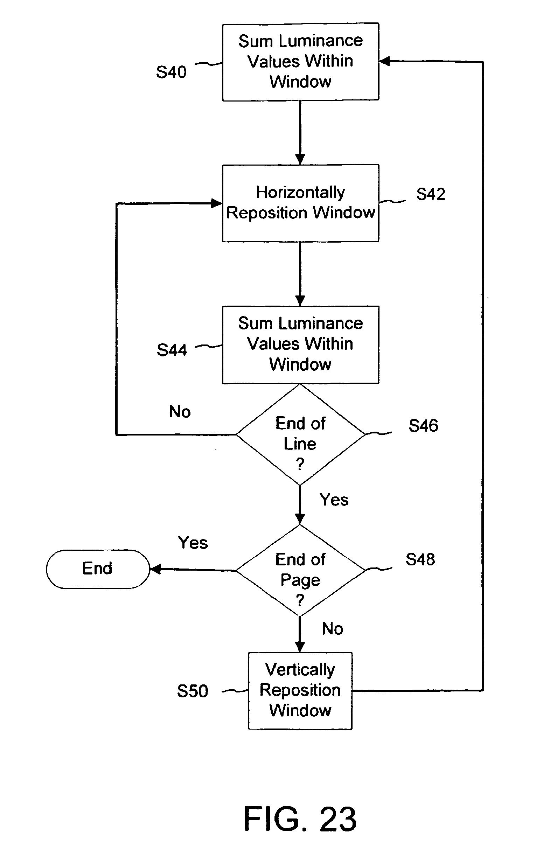

FIG. 23 illustrates one possible summing method for each color (color and K) plane according to a preferred embodiment to achieve the above color and black luminance values.

In step S40, each of the luminance values within a predetermined window (or pixel area) are summed. The window may be an n x n window, or and n x m window, where n and m are integers. In a preferred embodiment, pixels values with an 8 X 8 pixel window are summed. The resulting summation value is preferably saved for comparison against the other plane (color or K), to determine lum$_{final}$) as discussed above.

In step S42, the window location with respect to the color (or K) plane is repositioned (e.g., the window is a sliding window). To illustrate, if a first window frames the first n x n (e.g., 8x8) pixels in a color (or K) plane, the second window is adjusted to cover a new area, or an overlapping area. In the preferred embodiment, the window slides right (or horizontally) by four (4) pixels (e.g., if the first window captured the first 8 pixels, then on a first window slide, the window would then cover the 5$^{th}$ -12$^{th}$ pixels X 8). The luminance values within this second window are added in step S44. This value is preferably saved for comparison against the other color plane (or K plane), to determine lum$_{final}$ as discussed above.

The method determines if the window is at the end of a line (e.g., at the end of a plane edge) in step S46. If not, flow continues to step S42, where the window location is again repositioned. Otherwise, it is determined whether the entire plane has been analyzed in step S48. If so, the method ends. Otherwise, the window location is repositioned in step S50. The step S50 location adjustment preferably moves the window location down (or vertically) with respect to the plane to cover a new area or an overlapping area. In the preferred embodiment, the window is shifted down by 4 pixels. At this step, it is important to note that the new window location need not be realigned at the starting point (e.g., the top-left corner of the plane), but may be shifted down at the right plane edge. The window may then slide right to left. Of course, the step S50 alignment may locate the window below the original starting point (e.g., the left plane edge), with the window sliding left to right. Flow continues from step S50 to S40.

This process is preferably carried out for each of the color and K planes. The resulting area black luminance values are subtracted from the corresponding resulting color luminance values to achieve the final luminance value. This final luminance value (for each location area) can be analyzed to detect the watermark signal.

Application

Now consider a few applications of our inventive out-of-phase hiding techniques.

Identification Documents (exports, Driver's Licenses, etc.)

An out-of-phase image is hidden in an identification document to provide enhanced security. For example, a hidden image is a gray-scale version of the identification document's photograph. An airport screener, or law enforcement officer, illuminates the out-of-phase image with infrared (or ultraviolet) light for comparison of the hidden image to the printed photograph. Or, instead of a photograph, the hidden image may include text, which can be compared with the visibly printed text on the identification document. Still further, an identification document may include information steganographically hidden out-of-phase according to our presently disclosed techniques.

Hiding Bar Codes in Out-of-Phase Channels

Over the years, a number of standards organizations and private entities have formed symbology standards for bar codes. Some examples of standards bodies include the Uniform Code Council (UCC), European Article Numbering (EAN, also referred to as International Article Numbering Association), Japanese Article Numbering (JAN), Health Industry Bar Coding Counsel (HIBC), Automotive Industry Action Group (AIAG), Logistics Application of Automated Marking and Reading Symbols (LOGMARS), Automatic Identification Manufacturers (AIM), American National Standards Institute (ANSI), and International Standards Organization (ISO).

The UCC is responsible for the ubiquitous bar code standard called the Universal Product Code (UPC). AIM manages standards for industrial applications and publishes standards called Uniform Symbology Standards (USS). Some well know bar code schemes include UPC and UCC/EAN-128, Codabar developed by Pitney Bowes Corporation, 12 of 5 and Code 128 developed by Computer Identics, Code 39 (or 3 of 9) developed by Intermec Corporation, and code 93.

Some bar codes, such as UPC, are fixed length, while others are variable length. Some support only numbers, while others support alphanumeric strings (e.g., Code 39 supports full ASCII character set). Some incorporate error checking functionality.

While the bar codes listed above are generally one-dimensional in that they consist of a linear string of bars, bar codes may also be two-dimensional. Two dimensional bar codes may be in a stacked form (e.g., a vertical stacking of one-dimensional codes), a matrix form, a circular form, or some other two-dimensional pattern. Some examples of 2D barcodes include code 49, code 16k, Data Matrix developed by RVSI, QR code, micro PDF-417 and PDF-417.

For more information on bar codes, see D.J. Collins, N.N. Whipple, Using Bar Code-Why It's Taking Over, (2d ed.) Data Capture Institute; R.C. Palmer, The Bar Code Book, (3rd ed.) Helmers Publishing, Inc., and P.L. Grieco, M.W. Gozzo, C.J. Long, Behind Bars, Bar Coding Principles and Applications, PT Publications Inc.

A hidden, out-of-phase image can include a barcode. Consider the vast possibilities. A barcode is often disdained for aesthetic reasons, but a hidden, out-of-phase barcode can carry relatively large amounts of information while remaining virtually imperceptible. In one implementation, a barcode is redundantly hidden or titled throughout media using our out-of-phase embedding techniques. This allows for robust barcode detection even if only a portion of the media is recoverable. In another implementation one or more barcodes are placed in predetermined areas throughout the image. In still another implementation, a barcode reader, such as those provided by Symbol (e.g., the VS4000 and P300IMG models) or Welch Allyn (e.g., the Dolphin model), is augmented with an infrared illumination source and/or IR-filters. Once illuminated, the barcode reader detects and decodes a barcode hidden in a K channel.

Fiducials and Orientation Signal

In some digital watermarking techniques, the components of the digital watermark structure may perform the same or different functions. For example, one component may carry a message, while another component may serve to identify the location or orientation of the watermark in a signal. This orientation component is helpful in resolving signal distortion issues such as rotation, scale and translation. In some cases, channel capacity is congested by an orientation signal.

One improvement is to embed an orientation signal using our out-of-phase hiding techniques. The message component of a digital watermark can then be embedded using out-of-phase or non-out-of-phase embedding techniques. This improvement will increase message capacity, while improving visibility considerations. Scale, orientation, and image translation can be resolved based on the orientation of the fiducial.

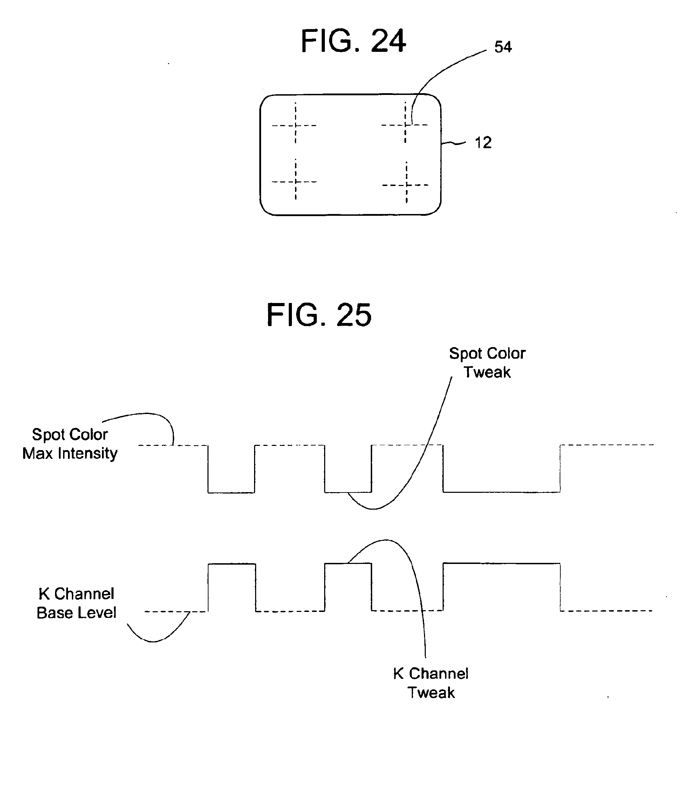

A related improvement embeds a plurality of fiducials or orientation markers 54 in an out-of-phase channel of media 12 (FIG. 24). A watermark detection module detects the fiducials to identify image distortion, if any.

Spot Colors

We have found that our inventive techniques are not limited to process colors. Indeed, our out-of-phase techniques can be extended to spot colors. With reference to FIG. 25, and preferably (but not limited to) relatively darker spot colors, e.g., violets, blues, etc., we counteract a watermark signal (or image) embedded in the spot color channel with an inverted signal in a K channel. Preferably, the K channel base intensity is subtle (e.g., 0 % as represented by the K channel base level dashed line in FIG. 25) in comparison to the base level spot color intensity (e.g., 100% intensity as represented by the spot color maximum level dashed line in FIG. 25). The watermark signal (or image) signal is embedded through a combination of negative spot color tweaks and positive, offsetting, K channel tweaks. Infrared illumination facilitates detection of the K-channel watermark tweaks. (Embedding a spot color need not be limited to negative tweaks. Indeed, if the spot color is not at 100% intensity, positive spot color tweaks and corresponding negative K channel tweaks can facilitate embedding.).

Paper Information and Printing Processes

Another improvement is to carry printing process information and/or paper characteristics with a digital watermark. For example, a digital watermark may include signal gain or embedding characteristics that are specific to a printing press, printing process, process ink type or paper characteristics. The digital watermark can be embedded in a digital file, which is analyzed prior to a print run. The embedding process is adjusted according to the watermark data. Or the watermark signal can be analyzed after printing one or more test copies. The signal strength or payload metric can be analyzed to determine whether the process should be adjusted.

Our out-of-phase digital watermark can be used to detect a misalignment in a printing process. With reference to FIG. 26 a printer 150 outputs a CMYK (or spot color, etc.) printed sheet 152. The printed sheet 152 includes an out-of-phase digital watermark or image hidden therein. An input device 154 captures an image of sheet 152. Preferably, input device 154 captures a visible spectrum image of sheet 152. The input device provides the captured image (e.g., digital scan data) to a watermark detector 156. The watermark detector 156 analyzes the captured image in search of the embedded out-of-phase digital watermark. The watermark detector 156 should not be able to detect the embedded watermark if the printing of the CMY and K are aligned, due the localized luminance cancellation of the signal tweaks (or luminance changes). The term aligned in this context implies that the CMY and K are sufficiently inverted to allow localized cancellation. A misalignment is identified if the watermark detector 156 reads the digital watermark. Such a misalignment is optionally communicated from the watermark detector 156 to the printer 150 or otherwise provided to announce the printing misalignment. Of course other alignment and color balance information can be identified from the detection of the digital watermark.

Color Channel Keys

A related inventive technique embeds a key in one color channel for decoding a watermark in a second color channel. Consider an implementation where a first digital watermark is embedded in a first color channel. The first digital watermark includes a payload including a key. The key is used to decode a digital watermark embedded in a second color plane. The term decode in this context includes providing a reference point to locate the second watermark, providing a key to unlock, decrypt, decode or unscramble the second digital watermark payload, etc. Of course this inventive technique is not limited to our out-of-phase digital watermarks.

## Out-of-Phase Watermark based on Time-Decay Fluorescence

Inks and dyes have recently emerged with unique fluorescent properties. Some of these properties allow for variable fluorescence (or emission) decay times. Typical decay times can be varied from less than a microsecond to tens of milliseconds and more. A CCD scanner and microprocessor can measure the decay emissions from the inks and dyes. Other filtered optical capture devices (cameras, digital cameras, web cameras, etc.) can be suitably interchanged with the CCD scanner. These inks and dyes (both hereafter referred to as "ink") also include unique emission characteristics, such as emitting in a particular frequency band, which allows for frequency-based detection.

Other unique characteristics include varying the frequency of light needed to activate the ink and the color of the ink's fluorescence. These characteristics can be variously combined to produce customized ink. These types of ink are typically excited with UV light and emit from ultraviolet (UV) to infrared (IR) wavelengths. To simplify the discussion, the term "UV" will be used to refer to ink that absorbs in the UV and emits in the UV and/or IR wavelengths. These inks are generally invisible when illuminated in the visible spectrum. Such inks are available from PhotoSecure in Boston, Massachusetts, USA, such as those sold under the trade name of SmartDYE™. See SPIE's September 2001 OE Magazine, pages 8-9 written by M. Brownell ("Counterfeiters Dye Over Security Measures"), for a further discussion of such inks. Of course other manufacturer's inks that have variable emission decay times can be suitably interchanged with this aspect of the present invention.

The present invention utilizes UV inks having different, yet generally predictable fluorescence decay times. The inventive digital watermark preferably includes at least two components (or signals) each of which is embedded with a UV ink that has a different fluorescence decay time.

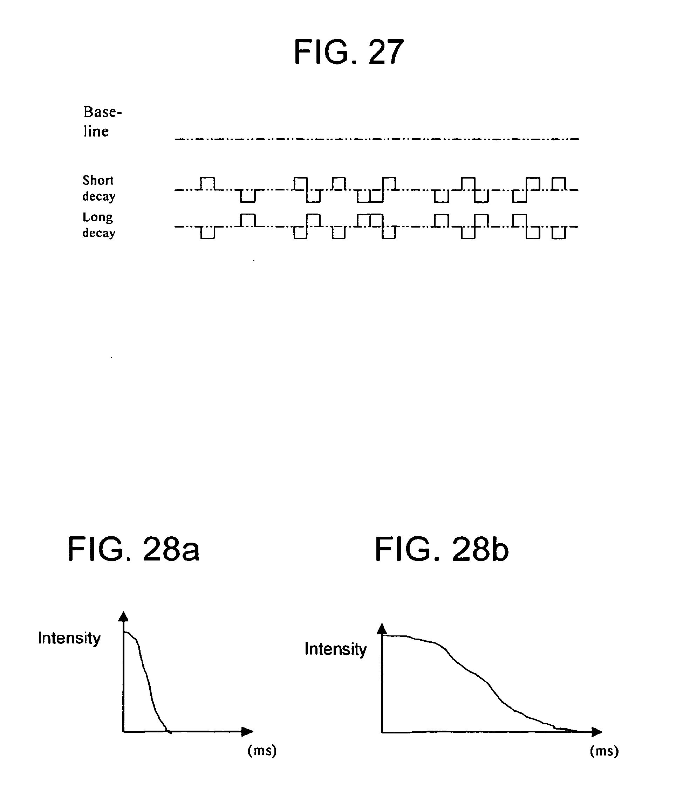

Consider a baseline signal illustrated in FIG. 27. The baseline signal represents white paper, a flat signal or an image signal that includes various color or grayscale components. Fig 27 also illustrates the baseline signal including a first digital watermark signal ("short decay") embedded therein. The illustrated "bumps" in FIG. 27 represent the watermark signal, e.g., upward or downward signal adjustments in relation to the respective baseline signal. If the baseline signal is paper, the short decay watermark signal can be applied (e.g., printed) to the paper. The short decay watermark signal is preferably printed with ink having a relatively short fluorescence decay curve as shown in FIG. 28a. The decay time extinction shown in Fig 28a preferably ranges from less than 1 millisecond (ms) to about 10 ms. Of course this range can be expanded according to need.

FIG. 27 also illustrates the baseline signal embedded with a second digital watermark signal ("long decay"). The long decay watermark signal is preferably embedded to be out-of-phase with respect to the short decay watermark signal. Most preferably, the long decay signal is approximately inverted with respect to the short decay signal. If the baseline signal is paper, the long decay watermark signal can be applied (e.g., printed) on the paper. The long decay watermark signal is preferably printed (e.g., applied) with ink having a relatively longer fluorescence decay curve as shown in FIG. 28b. The decay extinction time shown in FIG. 28b preferably ranges from several milliseconds (ms) to about 100 ms. Of course this range can be extended according to system need.

The short decay and long decay signals are preferably printed or otherwise applied to paper (or other surfaces). These collective signals form a time-dependent, "out-of-phase" digital watermark. Such a digital watermark has unique and desirable properties. A first property is that the digital watermark is preferably invisible when illuminated in the visible spectrum, since it is applied with the UV inks discussed above. A second property is that the digital watermark signal is imperceptible with steady state (e.g., constant) UV illumination. Imperceptibility is caused by local area cancellation of the first and second digital watermark signals. Indeed, since the second digital watermark signal (long decay signal) is inverted with respect to the first digital watermark signal (short decay signal), the luminance attributable to each of the two signals effectively cancel each other out under constant UV illumination. The visible result under steady-state illumination is the flat signal (e.g., the baseline signal).

Another desirable quality is that UV inks prevent almost all other successful counterfeit attempts, since the specific UV and delay properties are extremely difficult to replicate, particularly for a casual counterfeiter.

## Out-of-Phase Digital Watermark Detection

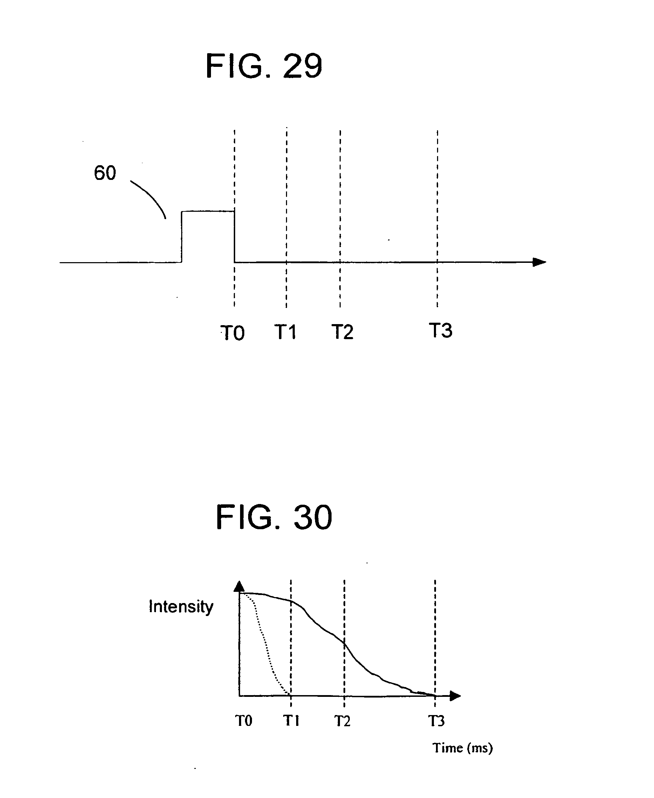

Exciting the digitally watermarked ink with UV illumination facilitates detection. Preferably, a pulse 60 of UV wavelength light as shown in FIG. 29 stimulates the digitally watermarked UV ink. The UV inks begin their emission decay at T0 or near to the falling edge of the UV pulse. The first watermark signal's (short decay) fluorescence emissions decay in a relatively short time (T1) as shown by the dotted curve in FIG. 30. The second watermark signal's (long decay) fluorescence emissions decay in a relatively longer time (T3) as shown by the solid curve in FIG. 30. The digital watermark is detectable from the longer decaying ink after emissions from the first ink decay (T1), but before emissions from the second ink decay (T3). The signal is detectable in this T1-T3 range since it is free from the canceling effects of the short decay ink. Of course, the second watermark signal may be more readily detected in a range of T1 - T2, due to emission strength in this range. In alternative cases, the T1 and T3 points mark predetermined decay levels, instead of emission extinction points. For example, at T1 the short decay ink may have decayed to a predetermined level. This level may be determined based on acceptable interference levels with respect to the longer decay ink, or vice versa.

A camera (or CCD sensor) can be gated or enabled (e.g., operating during the T 1- T2 time range shown by the dashed lines in FIG. 30) to capture emissions after the short decay time ink decays (T1), but while the long decay time ink is still emitting (until T3). (Alternatively, the camera can continuously capture UV emissions until a watermark signal is detected.). The digital watermark can be detected and decoded from this captured image. Of course, a gated range can be varied according to ink delay times and may even be varied as part of a security measure. For example, ink decay time (or the relative decay window between the first and second ink) can be maintained in secrecy or can be randomly varied. The particular gating window is then supplied to a camera for detection calibration. Alternatively, a separate robust watermark may carry encoded (or encrypted) information that suggests the decay windows. Or another identifier may be used to access the particular decay time information.

Embedding the Out-of-Phase Watermark with Separate Plates

In one embodiment, the short and long decay time inks are printed by separate printing plates, which are overprinted on top of a conventionally printed image (or blank paper or documents). For example, the short decay ink is separately overprinted on the image with a first plate, and then the image is overprinted with a second plate carrying the long decay time ink. As discussed above the short and long decay time inks are generally invisible when illuminated in the visible spectrum, so such overprinting is typically imperceptible in the visible spectrum. Some printing processes involve printing a laminate or overlay. The first and second plates can be used in this (or after) laminate or overlay process.

The overprinted inks can be detected as discussed above with respect to FIG. 30.

Embedding the Out-of-Phase Watermark with CMYK

Images that are stored in CMYK format, have built in redundancy since many different combinations of CMYK can be used to represent the same color. Advantage can be taken of this redundancy in a watermarking process to reduce the visibility of the watermark.

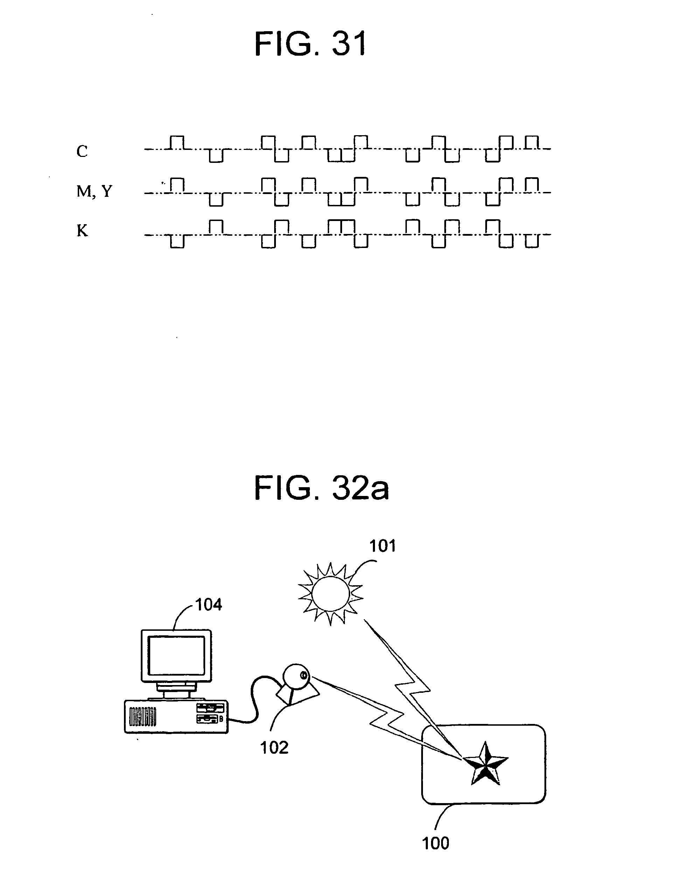

Now consider FIG. 31, where the dash/dot C, M, Y and K lines represent respective cyan, magenta, yellow and black color dimensions for a line in a color patch of a media signal (e.g., a line in a picture, image, document, etc.). The various color lines are embedded with a watermark signal. The watermark signal is preferably applied to each of the color component dimensions (C, M and Y). The M and Y channels are represented by one signal in FIG. 31, since these color components can be approximately equal, but separate signals for various graylevels. Of course, it is not necessary for these components to be equal, and in many cases the yellow and magenta components are not equal. The illustrated embedded "bumps" represent the watermark signal, e.g., upward or downward signal (e.g., color level) adjustments in relation to the respective color channel at given points over the baseline (color) signal. For the K dimension (or channel), the watermark signal is preferably embedded to be out-of-phase with the CMY channels. Most preferably, the K channel is approximately inverted with the watermark signals in the CMY color channels, as shown in FIG. 31. Collectively these color channels are referred to as a CMYK out-of-phase digital watermark.

Preferably, a long decay time UV ink (FIG. 28b) is combined with the K channel ink. Similarly, a short decay time UV ink (FIG. 28a) is combined with the CMY channel inks. As discussed, the UV inks are generally imperceptible when illuminated in the visible spectrum, yet emit detectable UV and/or IR emissions when excited by a UV light source (e.g., UV Diode, Laser UV diode, UV illumination source, etc.).

The watermark tweak for the K channel (including a first UV ink) is applied out-of-phase in comparison to the changes applied to the CMY channels (including a second UV ink). Thus the watermark visibility is greatly reduced. The low visibility properties result by the effective cancellation of the non-inverted signal by the inverted signal. The low visibility properties hold for situations involving steady-state UV illumination as discussed above for the FIG. 27 out-of-phase watermark.

The out-of-phase digital watermark can be detected by illuminating the printed image with a pulse of UV light. A camera is gated to capture the image after emissions from the short decay time ink are extinguished, but while the long decay time ink is still emitting. Alternatively, a camera continuously (or periodically) captures image data until a watermark detection process finds a watermark signal (e.g., such as after T1 in FIG. 30). The captured image is passed into a watermark detection process to detect the watermark signal.

With reference to FIG. 32a, media 100 includes an out-of-phase digital watermark applied with UV inks. The out-of-phase watermark can be a CMYK watermark or a two-channel watermark shown with reference to FIG. 27. Media 100 is excited by a UV illumination source 101. Media 100 can include documents, tags or labels, certificates, graphics, plastics, fabrics, metals, films, polymers, artwork, images, text, barcodes, photographs, etc., etc. UV illumination source 101 preferably emits a UV pulse such as shown in FIG. 29. The UV pulse excites the UV inks on media 100. The UV inks emit fluorescence emissions that begin to decay on (or near) the falling edge of the UV pulse. Camera 102 captures an image of the UV emissions. Camera 102 can be gated to capture an image after the decay of a shorter decay time ink, but before the decay of a longer decay time ink. The captured image is communicated to computer 104. Of course, camera 102 can communicate with computer 104 via a wireless, tethered link or other communications channel. Preferably, computer 104 includes executable software instructions to detect and decode the digital watermark signal embedded within media 100. The software instructions can be stored in memory or electronic memory circuits. Of course, computer 104 can be a handheld computer, a laptop, a general-purpose computer, a workstation, etc. Alternatively, computer 104 includes a hardwired implementation, which precludes the need for software instructions.

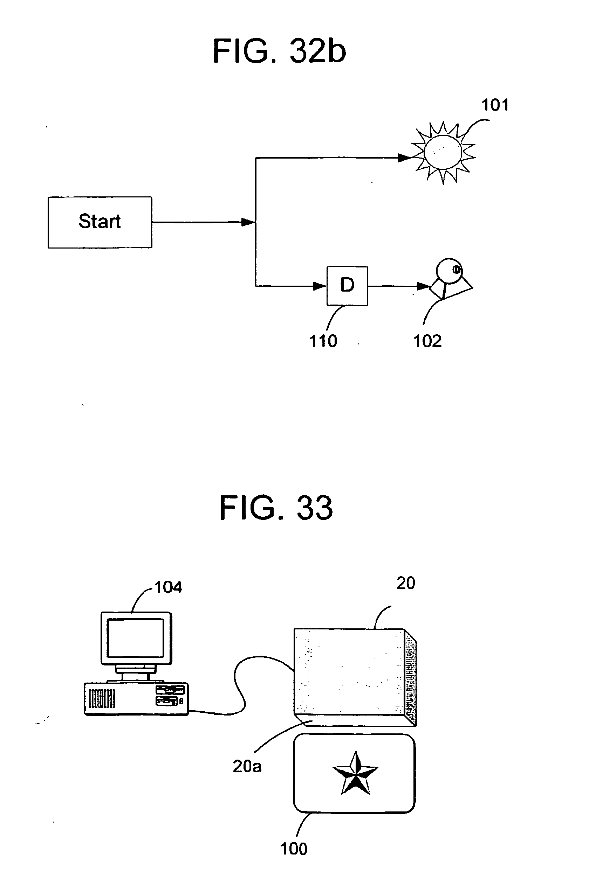

In one embodiment (FIG. 32b), a start signal is communicated to illumination source 101 and camera 102. The start signal enables illumination source 101 and camera 102. The start signal is preferably communicated through delay 110 to help synchronize camera 102's gating, e.g., to enable camera 102 at or near the T1 point (e.g., see FIGS. 29 and 30). Camera 102 can include internal timing source or signal (or can communicate with an external timing source or signal) to disable camera at the T2 point or beyond. Alternatively, camera 102 is disabled upon watermark detection. In an alternative embodiment, the start signal is communicated from illumination source 101 to camera 102. Delay 110 can be arranged internally in either illumination source 101 or camera 102, or can arranged external to these devices. Of course, other suitable synchronization techniques can be suitably interchanged with the present invention to facilitate gating of camera 102.

Additional Detection Methods

With reference to FIG. 33, a detection housing 20 houses a LTV illumination source 101 and camera 102 (not shown in FIG. 33, since they are within the opaque housing 20). Camera 102 can be a CCD sensor, a CMOS detector, digital camera, web camera, etc. The housing 20 is preferably opaque to shield (or otherwise constructed to filter) the camera 102 and media 100 from visible, UV and/or IR light. The housing 20 has an opening 20a to receive the media 100. In a first case, opening 20a is adapted to engulf media 100. This allows media 100 to be placed on a surface (e.g., table, imaging station, or counter) and the housing opening 20a to be placed over media 100, effectively shielding media 100 from visible, UV and/or IR light. In a second case, the opening 20a receives media 100 into (e.g., slides media through opening 20a) and positions media 100 within the opaque housing 20. In either case, the UV illumination source 101 illuminates media 100, and the camera 102 captures an image of the illuminated media (or the emissions from the UV inks used to print media 100). The digital camera 102 communicates with computing device 104, which detects and decodes a digital watermark embedded with media 100.

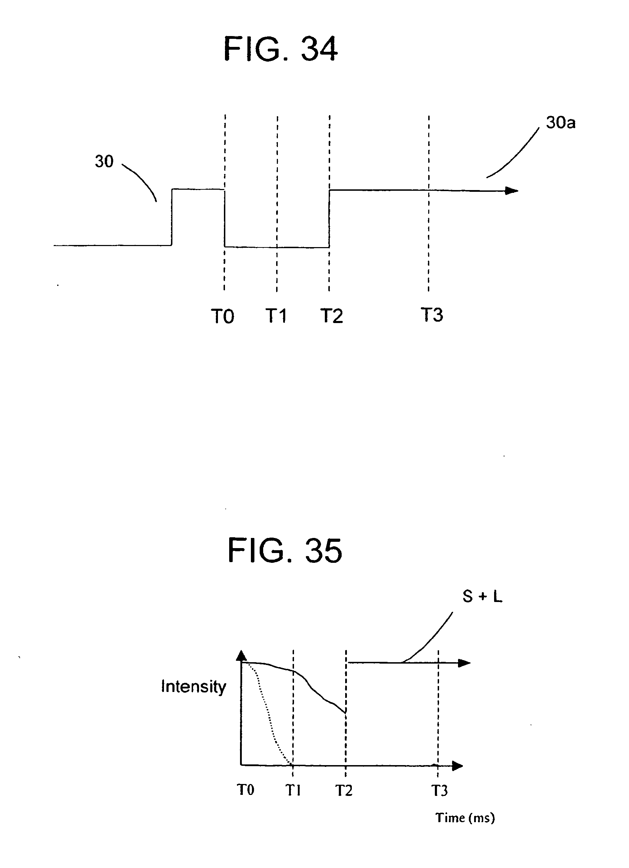

Now consider an embodiment described with reference to FIGS. 34 and 35. A UV pulse 30 excites the inks shown in FIGS. 28a and 28b. At a time T0 the inks begin to decay. At time T1 the short decay ink (illustrated with a dotted line) is exhausted or falls below a predetermined level. A camera detects the inverted watermark signal from the long decay ink in the time range of T1 - T2. At a time T2 the UV signal (pulse) transitions high 30a. The short (S) and long (L) decay inks are excited and emit at the

S + L level shown in FIG. 35: The watermark signal is effectively masked after the T2 point due to the cancellation of the non-inverted watermark component by the inverted watermark component.

Detection of the watermark signal is effectively limited to the T1 - T2 window in a multiple UV pulse system as shown in FIGS. 34 and 35. Of course the 10a pulse can remain high or can include a series of UV pulses, which may allow for multiple capture windows. The T1 - T2 time window can be optionally varied (time-shifted and/or shortened/lengthened) to improve visibility effects and to even further reduce detectability.

A UV out-of-phase watermark is fragile since an operation (including UV steady-state illumination) that combines the K channel with the CMY channel effectively cancels the watermark signal.

A fragile watermark has utility in many applications. Take counterfeit and piracy deterrence, for example. The inventive UV watermark is embedded in original CMYK media. If the media is copied, the embedded fragile watermark is either lost or degrades predictably, e.g., in part due to the decay-time characteristics of the UV inks. The copy is recognized as a copy (or counterfeit) by the absence or degradation of the watermarks. Particular camera gating settings also can be established to further frustrate would-be counterfeiters.

UV out-of-phase watermarks can also be used in conjunction with other watermarks, such as robust watermarks. The UV watermark announces a copy or counterfeit by its absence or degradation, while the other robust watermark identifies author, source, links and/or conveys metadata or other information, etc. In other embodiments, a UV out-of-phase watermark is an enabler. For example, some UV out-of-phase watermarks may include plural-bit data that is used to enable a machine, allow access to a secure computer area, verify authenticity, internet navigation and/or link to information. This plural-bit data is lost or sufficiently degrades in a copy, preventing the enabling functions.

Alternative Embodiments

Fluorescent inks are available which fluoresce a visible color emission when exposed to an ultra violet (UV) light source (e.g., a black UV light source). Many of these inks are invisible when illuminated (or excited) in the visible spectrum. These inks are ideally suited for covert applications such as copy control or counterfeit detection, since they are generally imperceptible when illuminated in the visible spectrum. Such inks are available from Gans Ink and Supply Company in Los Angeles, California, USA.

Fluorescent inks (which fluoresce a visible color) can be used to print out-of-phase watermarks, particularly when they have variable emission decay times. In this case, the UV light source illuminates media. The media is printed with at least a first UV ink and a second UV ink. The first UV ink includes a relatively shorter decay time in comparison to the second UV ink. An out-of-phase digital watermark is embedded with signals of the first and second watermark signals. A digital camera or CCD sensor captures the visible color emissions (e.g., a visible image) after the first UV ink fluorescence emissions are exhausted (or fall below a predetermined level), but before the second UV ink fluorescence emissions are exhausted.

In another embodiment, a digital watermark signal is generated (or provided) and the signal is printed with ink having specific excitation and/or emission wavelength bands. Illumination and/or detection of the watermark are carried out in the specific bands. The digital watermark need not be out-of-phase as discussed herein. Instead, the watermark signal is detected by monitoring (or illuminating) the specific wavelength bands. The monitoring bands are preferably in either the infrared or ultraviolet regions of the spectrum.

Embedding in Out-of-Range Colors

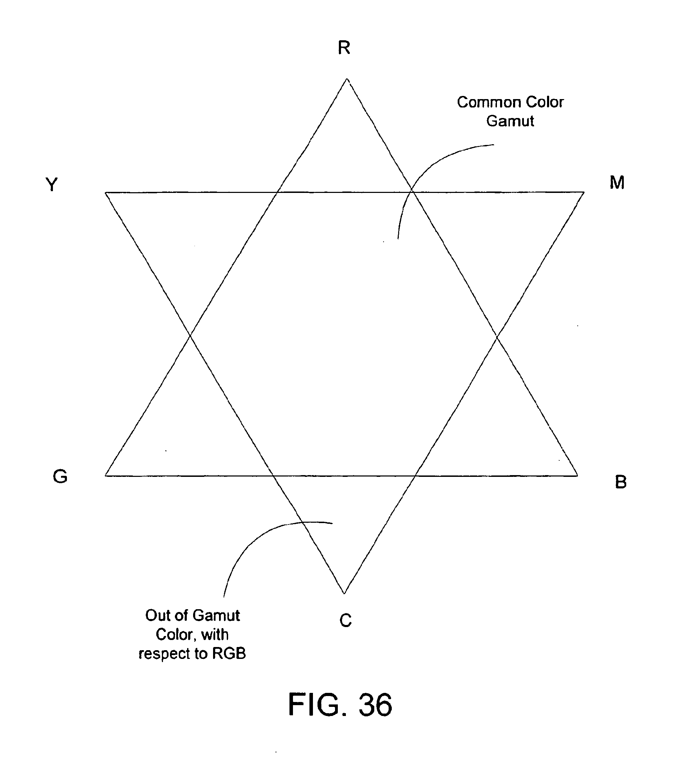

Another inventive fragile watermarking technique embeds watermark data in out-of-range colors. A color gamut defines a range of colors. Different color schemes (e.g., RGB and CMY) generally include a unique color gamut. Such color schemes will most certainly have overlapping color gamuts (or ranges), and unique (or out of gamut) color ranges, as shown in FIG. 36.

Differences in gamut between color models can be used to indicate that a transformation (or copy) has occurred. Consider security printers, which often select inks that lie outside the common color gamuts of capture devices (RGB) when printing documents. Printing with such out-of-range (or out of gamut) colors makes counterfeiting even more difficult. Consider a document that is printed with some dark blues & violets in the CMYK space, which are out of gamut for the RGB space. When a scanner scans the CMYK document, it typically converts the scanned image into the RGB space. Such processing looses the dark blues and violets in the conversion. An educated inspector can identify a counterfeit document by looking for the presence (or absence) of certain colors.

The inventive fragile watermark utilizes out-of-range color gamuts. Take the example given above. Dark blues & violets in the CMY (or CMYK) space are out of gamut with respect to the RGB space. Accordingly, a mask (or color spectral analysis) is used to identify dark blues and violets in a media signal. These areas are used (e.g., masked) as the areas for embedding watermark signals. The watermark is detectable with a CMY detection process. However, if the document is scanned with a RGB element scanner, the watermark is generally lost. As discussed above, conversion from CMYK to RGB fails to accurately convert out-of-phase colors. In this case, the dark blues and violets are out-of gamut. Accordingly, since the watermark signal is embedded in the out-of gamut colors, it is lost (or predictably degraded) during the conversion from CMY to RGB.

Consider the possibilities of such a fragile watermark. One can track, trace, detect counterfeits, control enabling functions, and many, many more application, like those discussed above.

Conclusion

Preferably, an out-of phase watermark signal is embedded in one channel so as to be inverted (e.g., 180 degrees out-of-phase) with respect to a corresponding channel(s). However, some cancellation will still be achieved if the signal is only approximately inverted, for example, in a range of $\pm$ 0-50 % from a completely inverted signal. The terms "inverted" and "out-of-phase" include values within this range. We note that while the present invention has been described with respect to CMYK process inks, the present invention is not so limited. Indeed, our inventive techniques can be applied to printing processes using more than four inks with the K channel canceling the three or more color channels. Similarly, as shown above under the spot color discussion, our inventive techniques are also applicable to printing processes using less than four inks. Of course our techniques can be used with a variety of printing techniques, including offset printing, dye diffusion thermal transfer (D2T2), other thermal transfers, process ink printing, etc., etc.

It should be appreciated that the order of steps in the FIGS. 4, 19, and 23 flow charts can be reordered without deviating from the scope of the present invention as defined by the appended claims. For example, in FIG. 4, the K channel could be embedded first, and then the CMY channels. Or the K channel could be embedded concurrently with or in between the color channels. In FIG. 19, instead of basing the step S22 decision on color saturation, the step S22 decision could be based on whether the pixel value is above or below one or all of the predetermined thresholds. The color saturation could be analyzed in subsequent steps.

Also, the signs of the decisions can be reversed, which will respectively reverse the decision tree branches, and color ranges. Also, decisions could be based on whether a pixel value is less than, or equal to a threshold value. Moreover, instead of a maximum pixel value, an average pixel value, or lower pixel value could be used. In FIG. 23, the window could alternatively be first vertically repositioned, and then horizontally. The window can also be repositioned on a random, or pseudo-random basis. The window size may also be varied.

The section headings in this application are provided merely for the reader's convenience, and provide no substantive limitations. Of course, the disclosure under one section heading may be readily combined with the disclosure under another section heading.

The above-described methods and functionality can be facilitated with computer executable software stored on computer readable media, such as electronic memory circuits, RAM, ROM, magnetic media, optical media, memory sticks, hard disks, removable media, etc., etc. Such software may be stored and executed on a general purpose computer, or on a server for distributed use. Data structures representing the various luminance values, out-of-phase embedded signals, embedded color planes, color signals, data signals, luminance signals, etc., may also be stored on such computer readable media. Also, instead of software, a hardware implementation, or a software-hardware implementation can be used.

In view of the wide variety of embodiments to which the principles and features discussed above can be applied, it should be apparent that the detailed embodiments are illustrative only and should not be taken as limiting the scope of the invention. Rather, we claim as our invention all such modifications as may come within the scope of the following claims.

As mentioned above the use of the term "UV" is used to mean inks that absorb in the UV and emit in the UV and/or IR wavelengths. There are also inks that absorb in the UV and emit visible wavelengths. Indeed the variable decay-time inks discussed herein can emit in a range from visible to UV wavelengths. Also, while "short decay" time inks and "long decay" time inks have been described as corresponding to "non-inverted" and "inverted" watermark signals, and to CMY channel signals and K channel signals, the invention is not so limited. Indeed a short decay ink can be used for an inverted signal and a K channel signal. And a long decay ink can be used for a non-inverted signal and a CMY channel signal. In addition to the ink application methods discussed above, inks and dyes can be application by well-known methods such as offset lithography, flexography, and silkscreen, as well as others. In some embodiments, these fluorescence varying inks and dyes can also vary in intensity. These characteristics can be evaluated for setting various threshold limits (e.g., T1 and T3 in FIG. 30).

The term "decay" has a broad definition throughout this document including the claims. For instance, decay may imply that fluorescence emissions are extinguished. Or decay may imply that emissions have fallen below a threshold level (e.g., based on detection or interference levels). In some cases, decay implies that emissions have begun to decay, such as after a falling edge of a UV pulse. Similarly, for this document the term "ink" may include both ink and/or a dye.

## Claims

1. A method of steganographically hiding a first image in a second image, the method comprising:

   analyzing an attribute of at least one of a plurality of color channels of the second image; and altering a first image component of the first image based on the analyzing the attribute of the at least one of the plurality of color channels of the second image, wherein the altering the first image component comprises scaling back signal strength of the first image component in response to a determination that the attribute of the at least one of the plurality of color channels of the second image equals or exceeds a predetermined threshold; after the altering the first image component, embedding the altered first image component in at least a first channel of the plurality of color channels of the second image; and embedding a second image component in a second channel of the plurality of channels of the second image, wherein the second image component offsets visibility attributable to at least a portion of the altered first image component.

2. The method of claim 1, wherein the attribute comprises a luminance of the second image.

3. The method of claim 2, wherein the altering the first image component comprises scaling back signal strength of the first image component in response to a determination that the luminance of the second image equals or exceeds a predetermined threshold.

4. The method of claim 3, wherein the scaling comprises linear scaling.

5. The method of claim 3, wherein the scaling comprises non-linear scaling.

6. The method of any of claims 2-5, wherein the plurality of color channels comprises a cyan color channel, a magenta color channel, a yellow color channel, and a black color channel, and wherein the step of analyzing the attribute comprises determining the luminance of the yellow channel.

7. The method of claim 1, wherein the attribute comprises a color saturation of at least one of the plurality of channels of the second image.

8. The method of claim 7, wherein the altering comprises scaling back signal strength of the first image component in response to a determination that the color saturation equals or exceeds a predetermined threshold.

9. The method of claim 7 or 8, wherein the plurality of color channels comprises a cyan color channel, a magenta color channel, a yellow color channel, and a black color channel, and wherein the step of analyzing the attribute comprises determining the color saturation of the yellow channel.

10. The method of claim 2, wherein the luminance of the second image comprises a combined luminance resulting from a combination of the plurality of color channels of the second image.

11. An image steganographically hiding a digital watermark, the image comprising:

an image segmented into a plurality of blocks, wherein the image comprises a black channel and a first color channel;
a first image component embedded in the black channel of a first of the plurality of blocks; and
a second image component embedded in the first color channel of the first block, wherein at least a portion of a visible artifact attributable to the first image component in the black channel is offset by the second image component.,

12. The image of claim 11, wherein the image further comprises a cyan color channel, a magenta color channel, and a yellow color channel, and wherein the first color channel comprises the cyan and magenta color channels,
the second image component being hidden in the first block in the cyan and magenta color channels, wherein the second image component is inverted with respect to the first image component.

13. The image of claim 11 or 12, wherein the first color channel comprises a spot color.

14. A computer-readable medium having computer executable instructions stored thereon to steganographically hide a first image in a second image, the instructions comprising:

instructions to analyze an attribute of at least one of a plurality of color channels of the second image; and
instructions to alter a first image component of the first image based on the analysis of the attribute of the at least one of the plurality of color channels of the second image, wherein the instructions to alter the first image component comprises instructions to scale back signal strength of the first image component in response to a determination that the attribute of the at least one of the plurality of color channels of the second image equals or exceeds a predetermined threshold;

instructions to, after the altering of the first image component, embed the altered first image component in at least a first channel of the plurality of color channels of the second image; and
instructions to embed a second image component in a second channel of the plurality of channels of the second image, wherein the second image component offsets visibility attributable to at least a portion of the altered first image component.

15. The computer-readable medium of claim 14, wherein the attribute comprises at least one of a luminance of the second image or a color saturation of at least one of the plurality of channels of the second image, and wherein the altering the first image component comprises at least one of scaling back signal strength of the first image component in response to a determination that at least one of the luminance or the color saturation of the second image equals or exceeds a predetermined threshold.

**Patentansprüche**

1. Verfahren zum steganografischen Verbergen eines ersten Bilds in einem zweiten Bild, wobei das Verfahren umfasst:

Analysieren eines Attributs von zumindest einem von mehreren Farbkanälen des zweiten Bilds; und
Ändern einer ersten Bildkomponente des ersten Bilds auf der Grundlage der Analyse des Attributs des zumindest einen der mehreren Farbkanäle des zweiten Bilds, wobei das Ändern der ersten Bildkomponente das Zurückskalieren der Signalstärke der ersten Bildkomponente als Reaktion auf eine Bestimmung umfasst, dass das Attribut des zumindest einen der mehreren Farbkanäle des zweiten Bilds gleich einer vorgegebenen Schwelle ist oder diese überschreitet;
nach dem Ändern der ersten Bildkomponente, Einbetten der geänderten ersten Bildkomponente in zumindest einen ersten Kanal der mehreren Farbkanäle des zweiten Bilds; und
Einbetten einer zweiten Bildkomponente in einem zweiten Kanal der mehreren Kanäle des zweiten Bilds,
wobei die zweite Bildkomponente die Sichtbarkeit verschiebt, die zumindest einem Bereich der geänderten ersten Bildkomponente zugeschrieben werden kann.

2. Verfahren nach Anspruch 1, wobei das Attribut eine Helligkeit des zweiten Bilds umfasst.

3.  Verfahren nach Anspruch 2, wobei das Ändern der ersten Bildkomponente das Zurückskalieren der Signalstärke der ersten Bildkomponente als Reaktion auf eine Bestimmung umfasst, dass die Helligkeit des zweiten Bilds gleich einer vorgegebenen Schwelle ist oder diese überschreitet.

4.  Verfahren nach Anspruch 3, wobei das Skalieren lineares Skalieren umfasst.

5.  Verfahren nach Anspruch 3, wobei das Skalieren nicht-lineares Skalieren umfasst.

6.  Verfahren nach irgendeinem der Ansprüche 2 bis 5, wobei die mehreren Farbkanäle einen Cyan-Farbkanal, einen Magenta-Farbkanal, einen Gelb-Farbkanal und einen Schwarz-Farbkanal umfassen und wobei der Schritt des Analysierens des Attributs das Bestimmen der Helligkeit des Gelb-Kanals umfasst.

7.  Verfahren nach Anspruch 1, wobei das Attribut eine Farbsättigung von zumindest einem der mehreren Kanäle des zweiten Bilds umfasst.

8.  Verfahren nach Anspruch 7, wobei das Ändern das Zurückskalieren der Signalstärke der ersten Bildkomponente als Reaktion auf eine Bestimmung umfasst, dass die Farbsättigung gleich einer vorgegebenen Schwelle ist oder diese überschreitet.

9.  Verfahren nach Anspruch 7 oder 8, wobei die mehreren Farbkanäle einen Cyan-Farbkanal, einen Magenta-Farbkanal, einen Gelb-Farbkanal und einen Schwarz-Farbkanal umfassen und wobei der Schritt des Analysierens des Attributs das Bestimmen der Farbsättigung des Gelb-Kanals umfasst.

10.  Verfahren nach Anspruch 2, wobei die Helligkeit des zweiten Bilds eine kombinierte Helligkeit umfasst, die sich aus einer Kombination der mehreren Farbkanäle des zweiten Bilds ergibt.

11.  Bild, das steganografisch ein digitales Wasserzeichen verbirgt, wobei das Bild umfasst:

     ein Bild, das in mehrere Blöcke unterteilt ist, wobei das Bild einen Schwarz-Kanal und einen ersten Farbkanal umfasst;
     eine erste Bildkomponente, die in dem Schwarz-Kanal eines ersten der mehreren Blöcke eingebettet ist; und
     eine zweite Bildkomponente, die in dem ersten Farbkanal des ersten Blocks eingebettet ist, wobei zumindest ein Bereich eines sichtbaren Artefakts, das der ersten Bildkomponente im Schwarz-Kanal zugeschrieben werden kann, von der zweiten Bildkomponente verschoben wird.

12.  Bild nach Anspruch 11, wobei das Bild ferner einen Cyan-Farbkanal, einen Magenta-Farbkanal und einen Gelb-Farbkanal umfasst und wobei der erste Farbkanal den Cyan- und Magenta-Farbkanal umfasst, wobei die zweite Bildkomponente im ersten Block in dem Cyan- und Magenta-Farbkanal verborgen ist, wobei die zweite Bildkomponente in Bezug auf die erste Farbkomponente invertiert ist.

13.  Bild nach Anspruch 11 oder 12, wobei der erste Farbkanal eine Volltonfarbe umfasst.

14.  Computerlesbares Medium, in dem computerausführbare Anweisungen gespeichert sind, um ein erstes Bild in einem zweiten Bild steganografisch zu verbergen, wobei die Anweisungen umfassen:

     Anweisungen zum Analysieren eines Attributs von zumindest einem von mehreren Farbkanälen des zweiten Bilds; und
     Anweisungen zum Ändern einer ersten Bildkomponente des ersten Bilds auf der Grundlage der Analyse des Attributs des zumindest einen der mehreren Farbkanäle des zweiten Bilds, wobei die Anweisungen zum Ändern der ersten Bildkomponente Anweisungen zum Zurückskalieren der Signalstärke der ersten Bildkomponente als Reaktion auf eine Bestimmung umfassen, dass das Attribut des zumindest einen der mehreren Farbkanäle des zweiten Bilds gleich einer vorgegebenen Schwelle ist oder diese überschreitet;
     Anweisungen zum Einbetten der geänderten ersten Bildkomponente in zumindest einem ersten Kanal der mehreren Farbkanäle des zweiten Bilds nach dem Ändern der ersten Bildkomponente; und
     Anweisungen zum Einbetten einer zweiten Bildkomponente in einem zweiten Kanal der mehreren Kanäle des zweiten Bilds,
     wobei die zweite Bildkomponente die Sichtbarkeit verschiebt, die zumindest einem Bereich der geänderten ersten Bildkomponente zugeschrieben werden kann.

15.  Computerlesbares Medium nach Anspruch 14, wobei das Attribut eine Helligkeit des zweiten Bilds und/oder eine Farbsättigung von zumindest einem der mehreren Kanäle des zweiten Bilds umfasst und wobei das Ändern der ersten Bildkomponente zumindest ein Zurückskalieren der Signalstärke der ersten Bildkomponente als Reaktion auf eine Bestimmung umfasst, dass die Helligkeit und/oder die Farbsättigung des zweiten Bilds gleich einer vorgegebenen Schwelle ist oder diese überschreitet.

## Revendications

1. Procédé destine à cacher de manière stéganographique une première image dans une deuxième image, le procédé comprenant les étapes consistant à :

   analyser un attribut d'au moins un d'une pluralité de canaux couleur de la deuxième image ; modifier une première composante d'image de la première image sur la base de l'analyse de l'attribut du au moins un de la pluralité des canaux couleur de la deuxième image, où la modification de la première composante d'image comprend le fait de diminuer la puissance du signal de la première composante d'image en réponse à une détermination que l'attribut du au moins un de la pluralité de canaux couleur de la deuxième image est égal ou supérieur à un seuil prédéterminé ; après avoir modifié la première composante d'image, incorporer la première composante d'image modifiée dans au moins un premier canal de la pluralité des canaux couleur de la deuxième image ; et incorporer une deuxième composante d'image dans un deuxième canal de la pluralité des canaux couleur de la deuxième image, où la deuxième composante d'image compense la visibilité attribuable à au moins une partie de la première composante d'image modifiée.

2. Procédé conforme à la revendication 1, où l'attribut comprend une luminance de la deuxième image.

3. Procédé conforme à la revendication 2, où la modification de la première composante d'image comprend la réduction d'échelle de la puissance du signal de la première composante d'image en réponse à une détermination que la luminance de la deuxième image est égale ou supérieure à un seuil prédéterminé.

4. Procédé conforme à la revendication 3, où la réduction d'échelle comprend l'échelle linéaire.

5. Procédé conforme à la revendication 3, où la réduction d'échelle comprend l'échelle non linéaire.

6. Procédé conforme à une quelconque des revendications 2 à 5, où la pluralité des canaux couleur comprend un canal couleur cyan, un canal couleur magenta, un canal couleur jaune et un canal couleur noir, et où l'étape consistant en analyser l'attribut comprend la mesure de la luminance du canal jaune.

7. Procédé conforme à la revendication 1, où l'attribut comprend une saturation de couleur d'au moins un de la pluralité des canaux de la deuxième image.

8. Procédé conforme à la revendication 7, la modification comprend la réduction d'échelle de la puissance du signal de la première composante d'image en réponse à une détermination que la saturation de couleur est égale ou supérieure à un seuil prédéterminé.

9. Procédé conforme à la revendication 7 or 8, où la pluralité des canaux couleur comprend un canal couleur cyan, un canal couleur magenta, un canal couleur jaune et un canal couleur noir, et où l'étape consistant en analyser l'attribut comprend la détermination de la saturation de couleur du canal jaune.

10. Procédé conforme à la revendication 2, où la luminance de la deuxième image comprend une luminance combinée résultant de la combinaison de la pluralité des canaux couleur de la deuxième image.

11. Image cachant de manière stéganographique un filigrane numérique, l'image comprenant :

    une image segmentée en une pluralité de blocs, où l'image comprend un canal noir et un premier canal couleur ; une première composante d'image incorporée dans le canal noir d'un premier de la pluralité de blocs ; et une deuxième composante d'image incorporée dans le premier canal couleur du premier bloc, où au moins une partie de l'artefact visible attribuable à la première composante d'image dans le canal noir est compensée par la deuxième composante d'image.

12. Image conforme à la revendication 11, où l'image comprend en outre un canal couleur cyan, un canal couleur magenta et un canal couleur jaune et où le premier canal couleur comprend les canaux couleur cyan et magenta, la deuxième composante d'image étant cachée dans le premier bloc dans les canaux couleur cyan et magenta, où la deuxième composante d'image est inversée par rapport à la première composante d'image.

13. Image conforme à la revendication 11 ou 12, où le premier canal couleur comprend une couleur d'accompagnement.

14. Support lisible par ordinateur contenant des instructions exécutables par ordinateur pour cacher de manière stéganographique une première image dans une deuxième image, les instructions comprenant :

    des instructions pour analyser un attribut d'au moins un d'une pluralité de canaux couleur de la deuxième image ; et des instructions pour modifier une première composante d'image de la première image sur la base de l'analyse de l'attribut du au moins un de la pluralité des canaux couleur de la deuxième image, où les instructions pour modifier la première composante d'image comprennent des instructions pour diminuer la puissance du signal de la première composante d'image en réponse à une détermination que l'attribut du au moins un de la pluralité de canaux couleur de la deuxième image est égal ou supérieur à un seuil prédéterminé ;

des instructions pour, après avoir modifié la première composante d'image,

incorporer la première composante d'image modifiée dans au moins un premier canal de la pluralité des canaux couleur de la deuxième image ; et

des instructions pour incorporer une deuxième composante d'image dans un deuxième canal de la pluralité des canaux de la deuxième image, où la deuxième composante d'image compense la visibilité attribuable à au moins une partie de la première composante d'image modifiée.

**15.** Support lisible par ordinateur conforme à la revendication 14, où l'attribut comprend au moins un d'une luminance de la deuxième image ou une saturation de couleur d'au moins un de la pluralité de canaux de la deuxième image, et où la modification de la première composante d'image comprend au moins une de la réduction d'échelle de la puissance du signal de la première composante d'image en réponse à une détermination qu'au moins une de la luminance ou la saturation de couleur de la deuxième image est égale ou supérieure à un seuil prédéterminé.

FIG. 1

FIG. 2

# FIG. 3a

C

M, Y

K

# FIG. 3b

C

M, Y

K

# FIG. 4

```
┌─────────────┐
│  Generate   │
│  Watermark  │ ～ S1
│   Signal    │
└─────────────┘
       │
       ▼
┌─────────────┐
│   Embed     │
│  Watermark  │
│  Signal in  │ ～ S2
│    CMY      │
│  Channels   │
└─────────────┘
       │
       ▼
┌─────────────┐
│  Generate   │
│  Inverse    │ ～ S3
│  Watermark  │
│   Signal    │
└─────────────┘
       │
       ▼
┌─────────────┐
│   Embed     │
│  Inverse    │ ～ S4
│  Watermark  │
│  Signal in K│
│  Channel    │
└─────────────┘
```

# FIG. 5

# FIG. 6

Convert Image to a
Black Channel Image — S30

Select a Location in the
Media to Hide the Black
Channel Image — S32

Modify the Black
Channel in the Selected
Location to
Accommodate the Black
Channel Image — S34

Provide Color Image in
Terms of CMY Tweaks,
which are Inverted with
Respect to the Black
Channel Image — S36

Modify CMY Pixels in
the Channels of the
Selected Location with
the CMY Tweaks — S38

# FIG. 7

# FIG. 8

## FIG. 9

Hidden
Signal Strength

80 %

(100%
Saturation)

Color Saturation

## FIG. 10

Hidden
Signal Strength

80 %

(100%
Saturation)

Color Saturation

K Channel
Tweak Level

Cap level

CMY
Tweak Level

Cap level

CMY Lower
Limit

# FIG. 11

| Determine a Luminance Value from C, M, and Y Channels | → | Resulting $\text{Lum}_{CMY}$ Value |

# FIG. 16

| Determine a Luminance Value from the K Channel | → | Resulting $\text{Lum}_K$ Value |

# FIG. 17

# FIG. 12

| | 1 | 2 | · · · | |
|---|---|---|---|---|
| | | | | |
| | | | | |
| | | · · · | | n |

~ 12

# FIG. 13

Image or Watermark
Signal

Media ———————→ **Embedding** ————————→ Embedded Media

k

# FIG. 14

Embed i$^{th}$ Block with K Channel Watermark Signal — 110

Invert Watermark Signal — 112

Embed Inverted Watermark Signal in CMY Channels — 114

Detect Digital Watermark — 116

Increase WM Strength

122

Sufficient Detection ?

No

— 118

Yes

i = i + 1 — 120

No

i = n ?

Yes

END

k

# FIG. 15a

# FIG. 15b

# FIG. 18

```
┌──────────────┐
│  Determine   │
│  CMY and K   │─── S10
│  Luminance   │
│   Values     │
└──────┬───────┘
       │
       ▼
┌──────────────┐
│   Subtract   │
│  Lum_K from  │
│  Lum_CMY to  │─── S11
│  Determine   │
│  Lum_final   │
└──────┬───────┘
       │
       ▼
┌──────────────┐
│   Analyze    │
│ Lum_final to │─── S12
│    Detect    │
│  Watermark   │
│    Signal    │
└──────────────┘
```

Measured RGB
Value

$R_0, G_0, B_0$

# FIG. 20

Determine a Color
Saturation Value
(ColSat) for an RGB
Pixel — S20

Is
ColSat <
$T_{COL}$
? — S22

Yes

No

S24 — Is
Max Pixel
Value <
$T_1$
?

Yes

No

S26 — Designate
RGB Pixel
as Black

S28 — Is
Max Pixel
Value <
$T_2$
?

Yes

No

Designate
RGB Pixel
as Color — S30

Designate
RGB Pixel
as White — S32

S34 — Is
Max Pixel
Value <
$T_3$
?

Yes

No

Designate
RGB Pixel
as Color — S36

Designate
RGB Pixel
as White — S38

FIG. 19

# FIG. 21

$T_1$          $T_2$

0 $\sim$ |————————|—————|—————————|————————— $\sim$ 255

$S_B$                    $S_{CMY}$          White

# FIG. 22

$T_3$

0 $\sim$ |———————|——|——|————————|————————— $\sim$ 255

$S_C$  $S_M$  $S_Y$          White

156

WM Detector

154

Printer

Sheet      152

150

# FIG. 26

FIG. 23

# FIG. 24

# FIG. 25

# FIG. 27

Base-
line

Short
decay

Long
decay

# FIG. 28a

Intensity

(ms)

# FIG. 28b

Intensity

(ms)

## FIG. 29

## FIG. 30

# FIG. 31

C

M, Y

K

# FIG. 32a

101

104

102

100

# FIG. 32b

101

Start

110

102

# FIG. 33

104

20

20a

100

# FIG. 34

30 30a

T0  T1  T2  T3

# FIG. 35

S + L

Intensity

T0  T1  T2  T3

Time (ms)

R

Common Color
Gamut

Y                                                                        M

G                                                                        B

Out of Gamut
Color, with
respect to RGB

C

# FIG. 36

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 89890101 A
- US 09933863 A
- US 09945243 A
- US 10115441 A
- US 10115444 A
- US 10115582 A
- US 50388100 A
- US 6614914 B
- US 5862260 A
- US 6122403 A
- EP 0921675 A2

### Non-patent literature cited in the description

- **D.J. COLLINS ; N.N. WHIPPLE.** Using Bar Code-Why It's Taking Over. Data Capture Institute
- **R.C. PALMER.** The Bar Code Book. Helmers Publishing, Inc,
- **P.L. GRIECO ; M.W. GOZZO ; C.J. LONG.** Behind Bars, Bar Coding Principles and Applications. PT Publications Inc
- **M. BROWNELL.** Counterfeiters Dye Over Security Measures. *SPIE's,* September 2001, 8-9